# EUROPEAN PATENT APPLICATION

(11) **EP 4 243 043 A2**
(43) Date of publication of application: **13.09.2023**
(21) Application number: 23156553.2
(22) Date of filing: 14.02.2023
(51) Int. Cl.: H01G 11/26, H01G 11/86, H01G 13/00, B41J 2/01, H01G 11/28, H01G 11/84, H01M 4/04, H01M 4/66, H01M 10/0585, H01M 50/46, H01M 50/471, H01G 11/52, H01G 13/04, H01M 4/134, H01M 4/1395, H01M 4/62, H01M 4/02

(54) **ELECTRODE, ELECTROCHEMICAL ELEMENT, APPARATUS FOR MANUFACTURING ELECTRODE, AND METHOD OF MANUFACTURING ELECTRODE**

(30) Priority: 09.03.2022 JP 2022035868; 30.11.2022 JP 2022190931
(71) Applicant: Ricoh Company, Ltd., Tokyo 143-8555 (JP)
(72) Inventor: SHIRAISHI, Naoki, 143-8555 Tokyo (JP); MATSUOKA, Kohji, 143-8555 Tokyo (JP); ZAMA, Yuu, 143-8555 Tokyo (JP); TODA, Naohiro, 143-8555 Tokyo (JP)
(74) Representative: Marks & Clerk LLP

(57) **Abstract**

An electrode is provided that includes a base (21), an electrode mixture layer (22) on the base (21), and an insulating layer (23) on the electrode mixture layer (22). In a surface image of the insulating layer (23), the insulating layer (23) includes unit insulating layers each surrounded by a non-insulating layer region where the insulating layer (23) is not formed. When a part of the unit insulating layers having a greatest number among unit layers having an area (µm²) of 1,000 µm² or more are designated as first insulating regions (23a), and another part of the unit insulating layers each having an area (µm²) two times or more of an area of each of the first insulating regions (23a) are designated as second insulating regions (23b), the insulating layer (23) includes both the first insulating regions (23a) and second insulating regions (23b).

## Description

### BACKGROUND

### Technical Field

The present disclosure relates to an electrode, an electrochemical element, an apparatus for manufacturing an electrode, and a method of manufacturing an electrode.

### Related Art

Conventionally, electrochemical elements such as lithium ion secondary batteries, electric double layer capacitors, lithium ion capacitors, and redox capacitors, have been provided with separators such as paper, nonwoven fabric, and porous films for the purpose of preventing a short circuit between a positive electrode and a negative electrode.

In recent years, an electrode-integrated separator in which an electrode mixture layer and an insulating layer are sequentially formed on a base is being used. The insulating layer hinders ion conduction, so that the internal resistance of an electrochemical element increases, and thus, the performance of the electrochemical element deteriorates. Addressing this issue, a technique for improving the ionic conductivity while maintaining safety has been proposed in which the insulating layer includes fine formation regions and non-formation regions (see, for example, Japanese Patent No. 3953026).

However, in the conventional technique described in Japanese Patent No. 3953026, there is a trade-off relationship in which a desired safety level may not be achieved if the non-formation regions in the insulating layer are increased so that ion conduction is not hindered and the deterioration of the performance of the electrochemical element is minimized. Therefore, to achieve both a desired performance and safety level of the electrochemical element, it is preferable to use an appropriate technique for forming the insulating layer to appropriately select a pattern of the formation regions and the non-formation regions.

### SUMMARY

An object of the present disclosure is to provide an electrode by which both performance and safety of an electrochemical element are satisfied.

An electrode of the present disclosure as a means of solving the above-mentioned problems is an electrode including a base, an electrode mixture layer on the base, and an insulating layer on the electrode mixture layer. In a surface image of the insulating layer viewed from above the electrode, the insulating layer includes unit insulating layers each surrounded by a non-insulating layer region where the insulating layer is not formed. When, in a graph having a horizontal axis representing an area (µm²) of the unit insulating layers and a vertical axis representing a number of the unit insulating layers, a part of the unit layers having a greatest number among unit layers having an area (µm²) of 1,000 µm² or more are designated as first insulating regions, and another part of the unit insulating layers each having an area (µm²) two times or more of an area of each of the first insulating region are designated as second insulating regions, the insulating layer includes both the first insulating regions and second insulating regions.

According to the present disclosure, an electrode is provided by which both performance and safety of an electrochemical element are satisfied.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a graph illustrating a relationship between an area (µm²) of unit insulating layers and the number of unit insulating layers, in a case of a high proportion of first insulating regions, each of which is an independent region;
FIG. 2 is a graph illustrating a relationship between an area (µm²) of unit insulating layers and the number of unit insulating layers, in a case of a high proportion of second insulating regions, each of which is a coupled region;
FIG. 3A is a schematic diagram illustrating a forming method for forming a pattern of an insulating layer formation region and an insulating layer non-formation region on an electrode mixture layer;
FIG. 3B is a schematic diagram illustrating a forming method for forming a pattern of an insulating layer formation region and an insulating layer non-formation region on an electrode mixture layer;
FIG. 4 is image data in the case of the high proportion of the second insulating regions, each of which is a coupled region;
FIG. 5 is image data in the case of the high proportion of the first insulating regions, each of which is an independent region;
FIG. 6 is a diagram for explaining a change in an area ratio between the first insulating regions and the second insulating regions when a droplet amount changes in the same image pattern;
FIG. 7 is an explanatory diagram for explaining a covered region and an uncovered region;
FIG. 8 is an illustration of a non-uniform image pattern;
FIG. 9 is a schematic diagram illustrating an apparatus for manufacturing an electrode for performing an electrode manufacturing method of the present embodiment;
FIG. 10 is a schematic diagram illustrating a variation of a liquid discharge apparatus of FIG. 9;
FIG. 11 is a schematic diagram illustrating a liquid discharge apparatus that is an apparatus for manufacturing an electrode according to the present embodiment;
FIG. 12 is a schematic diagram illustrating a variation of the liquid discharge apparatus of FIG. 11;
FIG. 13 is a configuration diagram illustrating a printing portion using a drum-shaped intermediate transfer body as the apparatus for manufacturing an electrode according to the present embodiment;
FIG. 14 is a configuration diagram illustrating a printing portion using an endless belt type intermediate transfer body as the apparatus for manufacturing an electrode according to the present embodiment;
FIG. 15 is an exploded schematic view of a liquid discharge head;
FIG. 16 is an explanatory diagram illustrating a channel configuration of the liquid discharge head;
FIG. 17 is a cross-sectional perspective view of the channel configuration of the liquid discharge head;
FIG. 18 is a configuration diagram illustrating a head including a parallelogramshaped nozzle plate;
FIG. 19 is an explanatory diagram illustrating a state where a plurality of the heads in FIG. 18 are aligned;
FIG. 20 is a diagram illustrating an image pattern at a discharge rate of 12%;
FIG. 21 is a diagram illustrating an image pattern at a discharge rate of 15%;
FIG. 22 is a diagram illustrating an image pattern at a discharge rate of 18%;
FIG. 23 is a diagram illustrating an image pattern at a discharge rate of 20%;
FIG. 24 is a diagram illustrating an image pattern at a discharge rate of 20%;
FIG. 25 is a diagram illustrating an image pattern at a discharge rate of 22.5%;
FIG. 26 is a diagram illustrating an image pattern at a discharge rate of 36%;
FIG. 27 is a diagram illustrating an example of an image pattern at a discharge rate of 45%;
FIG. 28 is a diagram illustrating an image pattern at a discharge rate of 60%;
FIG. 29 is a diagram illustrating an image pattern at a discharge rate of 80%;
FIG. 30 is a diagram illustrating an image pattern at a discharge rate of 100%; and
FIG. 31 is a schematic diagram of an electrochemical element according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### (Electrode)

An electrode according to the present disclosure includes a base, an electrode mixture layer provided on the base, and an insulating layer provided on the electrode mixture layer. The insulating layer includes first insulating regions and second insulating regions.

In the present disclosure, an insulating layer includes first insulating regions, each of which is an independent region, and second insulating regions, each of which is a region in which a plurality of the first insulating regions are coupled. Each of the first insulating regions is a unit insulating layer having the greatest number among unit insulating layers having an area (µm²) of 1,000 µm² or more in a graph having a horizontal axis representing the area (µm²) of the unit insulating layers and a vertical axis representing the number of the unit insulating layers. The unit insulating layers are each a single insulating layer surrounded by a non-insulating layer region where the insulating layer is not formed, and the unit insulating layers are obtained from a surface image of the insulating layer when the electrode is viewed from above. Each of the second insulating regions is an insulating layer having an area (µm²) two times or more of the area of each of the first insulating regions in the unit insulating layer.

If the insulating layer includes the first insulating regions, each of which is an independent region, it is possible to uniformly provide formation regions and non-formation regions of the insulating layer on the electrode mixture layer, so that the cover ratio of the insulating layer can be reduced while maintaining a safety level and the output density can be maintained. If the insulating layer includes the second insulating regions, it is possible to form an insulating layer having a small layer thickness and a wide width on the electrode mixture layer, so that the safety level and float characteristics can be improved.

Here, the first insulating regions and the second insulating regions in the insulating layer may be defined as follows.

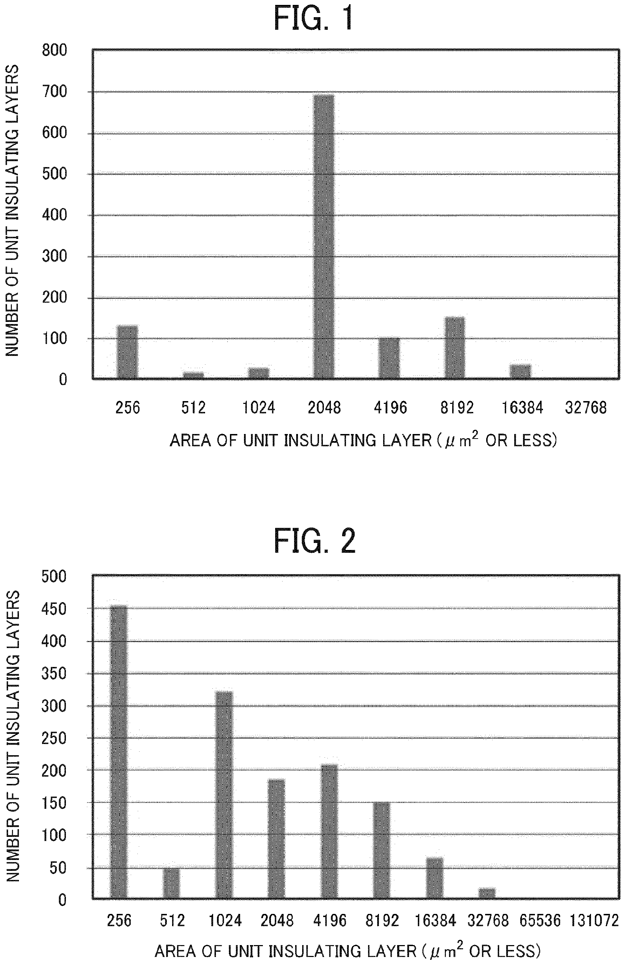

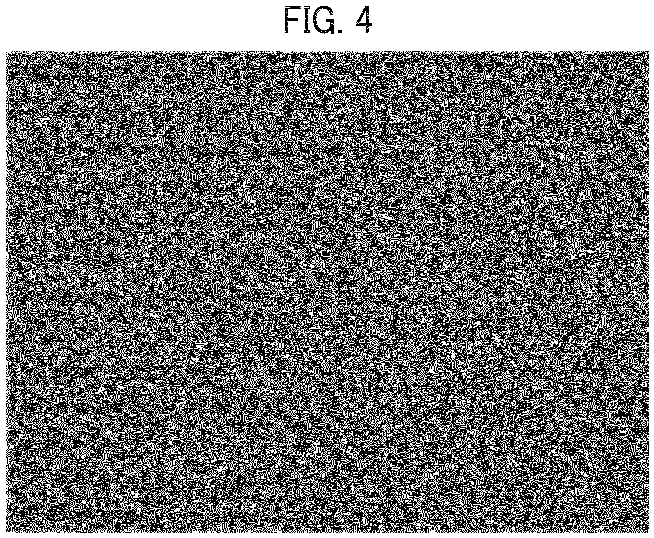

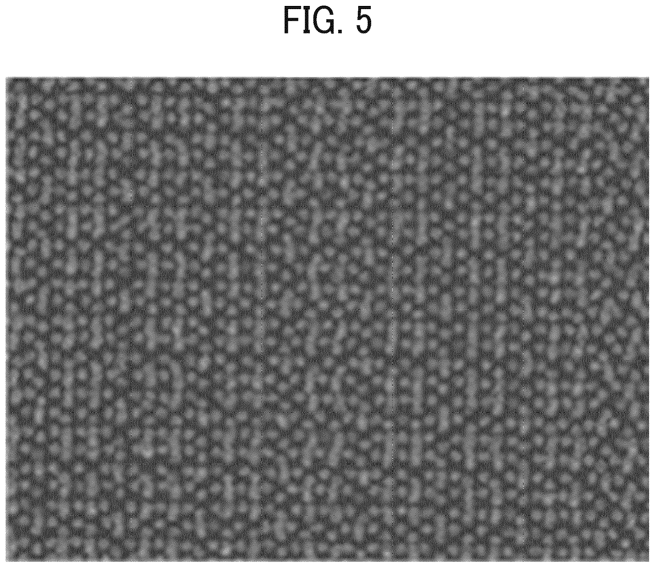

FIG. 1 is a graph illustrating a case of a high proportion of the first insulating regions, each of which is an independent region in Example 5 described later. FIG. 5 is image data illustrating the case of the high proportion of the first insulating regions. FIG. 2 is a graph illustrating a case of a high proportion of the second insulating regions, each of which is a coupled region in Example 2 described later. FIG. 4 is image data illustrating the case of the high proportion of the second insulating regions. As illustrated in FIGs. 1 and 2, the graph width on the horizontal axis is set to intervals of 2ⁿ (n is a natural number) µm². However, any numerical width may be used, and it is preferable to use a numerical width at which it is possible to set the horizontal axis using a boundary of 1,000 µm², which is the lower limit of the area of the first insulating regions. In FIGs. 1 and 2, for example, a bar graph having a value of 2048 on the horizontal axis represents an area of a unit insulating layer that is greater than 1,024 µm² and equal to or less than 2,048 µm². Each of the other bar graphs also represents a range from greater than a lower limit to equal to or less than an upper limit. In the case of FIG. 2, if the graph width is set to intervals of 2ⁿ (n is a natural number) µm², the bar graph of 1,024 µm² includes unit insulating layers of greater than 512 µm² and equal to or less than 1,024 µm². In this case, to precisely calculate the first insulating regions, the numerical width of the horizontal axis can be adjusted, for example, to intervals of 100 µm², so that the boundary of 1,000 µm², which is the lower limit of the area of the first insulation regions, is included.

From surface images of the insulating layer when the electrode is viewed from above (FIGs. 5 and 4), graphs are obtained in which the horizontal axis represents the area (µm²) of the unit insulating layers and the vertical axis represents the number of the unit insulating layers, as illustrated in FIGs. 1 and 2. At this time, the unit insulating layer is one (single) region in the insulating layer surrounded by a non-insulating layer region where the insulating layer is not formed (adjacent insulating layers do not contact or overlap each other). Accordingly, the insulating layer includes a plurality of unit insulating layers.

Each of the first insulating regions is an insulating layer formed by one dot having an area of the unit insulating layer that is 1,000 µm² or more.

Each of the second insulating regions is an insulating layer in which a plurality of the first insulating regions are coupled (adjacent ones of the first insulating regions contact each other or at least partly overlap each other). That is, the second insulating region is an insulating layer having an area two times or more the area of a unit insulating layer in which the number thereof is the greatest in the first insulating regions.

In other words, the insulating layer has a sea-island shape, when the electrode is viewed from above. The insulating layer includes insulating regions each formed of one dot and formed by discharge from a nozzle, and insulating regions formed of a plurality of dots and formed by coupling the insulating regions formed of one dot.

Here, the graphs illustrated in FIGs. 1 and 2 can be obtained, for example, as follows.

First, the area (µm²) of the unit insulating layer, which is a value on the horizontal axis, can be calculated as follows. Microscopic images (magnification of approximately 100) of a surface of the electrode on which the insulating layer is formed, are captured by an electron microscope (MERLIN, manufactured by Zeiss) and stored as image data (FIGs. 4 and 5). The image data corresponding to the graph of FIG. 1 is illustrated in FIG. 5, and the image data corresponding to the graph of FIG. 2 is illustrated in FIG. 4.

Next, any one region of the insulating layer is extracted from the obtained image data by using the tool "Magic Wand" (paint.net 4.3) in the image editing/processing software paint.net. Afterwards, the extracted region is binarized, based on the color density, and the area of a unit region having a density of 50% or more, that is, the area (µm²) of the unit insulating layer, is calculated. In the binarized image, a region having a density lower than 50% is the insulating layer non-formation region. The area of the insulating layer non-formation region can also be calculated by a method similar to the one used for the area of the unit insulating layer.

The number of unit insulating layers, which is a value on the vertical axis, is calculated by counting the number of unit insulating layers obtained from the binarized image.

The calculated area (µm²) of the unit insulating layer and the number of unit insulating layers are used to obtain the graphs illustrated in FIGs. 1 and 2.

Depending on the relationship between the color of the insulating layer and the color of the electrode mixture layer, the binarization based on the color density may not be possible. As an example of such a case, there is a case where the insulating layer and the electrode mixture layer have similar color density and may not be distinguished from each other in a microscope image. In such a case, for example, elemental mapping of an insulating layer material is performed by energy dispersive X-ray spectroscopy (EDS) to obtain a two-dimensional image, so that the total area (µm²) of the unit insulating layers and the area (µm²) of each unit insulating layer in the electron microscope image can be calculated.

The density as a threshold value is set to 50% for binarization based on the color density. This is based on the fact that, for a density of 50% or more, the electrode mixture layer is covered by the insulating layer, so that it is possible to achieve excellent insulation.

The area ratio (A:B) between an area A of the first insulating regions and an area B of the second insulating regions is preferably 20:80 to 90: 10, and more preferably 30:70 to 70:30.

When the lower limit of the area ratio of the first insulating regions, each of which is an independent region, is within the above range, an electrode can be provided that has excellent output density without being excessively covered by the insulating layer. When the upper limit of the area ratio of the first insulating regions, each of which is an independent region, is within the above range, the electrode mixture layer can be sufficiently covered by the insulating layer, and it is possible to provide an electrode that has excellent insulation.

The area A of the first insulating regions or the area B of the second insulating regions can be calculated by multiplying the area of the unit insulating layers belonging to the first insulating regions or the second insulating regions by the number of unit insulating layers, based on the graphs illustrated in FIGs. 1 and 2.

The insulating layer, which is formed on the electrode mixture layer, preferably includes a region where the insulating layer is formed on the electrode mixture layer (hereinafter referred to as a "formation region") and a region where the insulating layer is not formed on the electrode mixture layer (hereinafter referred to as a "non-formation region").

The presence of the formation region ensures a safety level, and the presence of the non-formation region improves the ionic conductivity, thus making it possible to prevent deterioration of the performance of an electrochemical element.

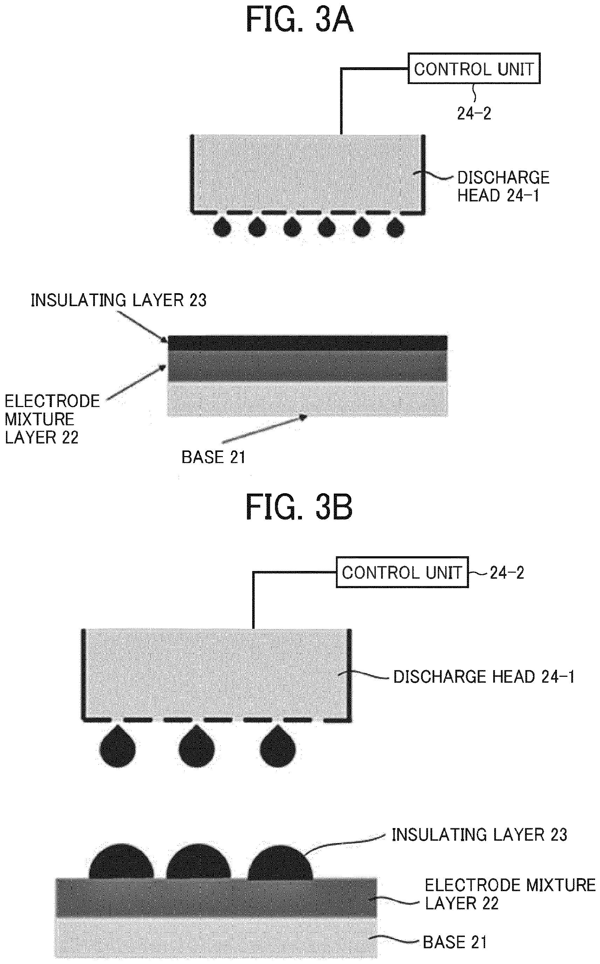

If inkjet discharge is used as a method of applying the liquid composition, it is possible to generate any image pattern by controlling the timing of discharge or non-discharge of each nozzle, to provide the formation region and the non-formation region. If the liquid composition is discharged from consecutive nozzles, as illustrated in FIG. 3A, it possible to increase the proportion of the formation regions on the electrode mixture layer. On the other hand, non-discharge of the liquid composition from a nozzle adjacent to the nozzle that discharges the liquid composition, as illustrated in FIG. 3B, makes it possible to divide the insulating layer into formation regions and non-formation regions.

In FIGs. 3A and 3B, reference numeral 21 represents the base, reference numeral 22 represents the electrode mixture layer, reference numeral 23 represents the insulating layer, reference numeral 24-1 represents a discharge head, and reference numeral 24-2 represents a control unit.

If inkjet discharge is used, it is possible to control a droplet amount discharged from each nozzle. For example, in the case of piezo-type inkjet discharge in which a voltage is applied to a piezo element to deform a liquid chamber and thus to discharge a liquid composition from a nozzle, the droplet amount to be discharged can be adjusted to any amount by adjusting a voltage waveform applied to the piezo element.

In both the case illustrated in FIG. 3A in which the droplet amount per one droplet is reduced to discharge droplets from all nozzles and the case illustrated in FIG. 3B in which the droplet amount per one droplet is doubled to alternately discharge and not discharge droplets from half of the nozzles, it is possible to apply the same amount of insulating layer per area on the electrode mixture layer.

In the case illustrated in FIG. 3A, all the nozzles discharge droplets, and thus, the proportion of the formation region in the insulating layer increases, resulting in uniform layer formation. In the case illustrated in FIG. 3B, there is a large number of non-discharge nozzles, and thus, the proportion of the non-formation region increases, while the thickness of the insulating layer in the formation region increases from the large amount of one droplet.

In addition, an allowable range and an optimal value of the droplet amount that may be discharged by the inkjet method are different depending on the size of the nozzle of a discharge port, and the physical properties of the liquid composition such as viscosity, thixotropy, static surface tension, dynamic surface tension, and a particle diameter (shape) of a solid material being contained.

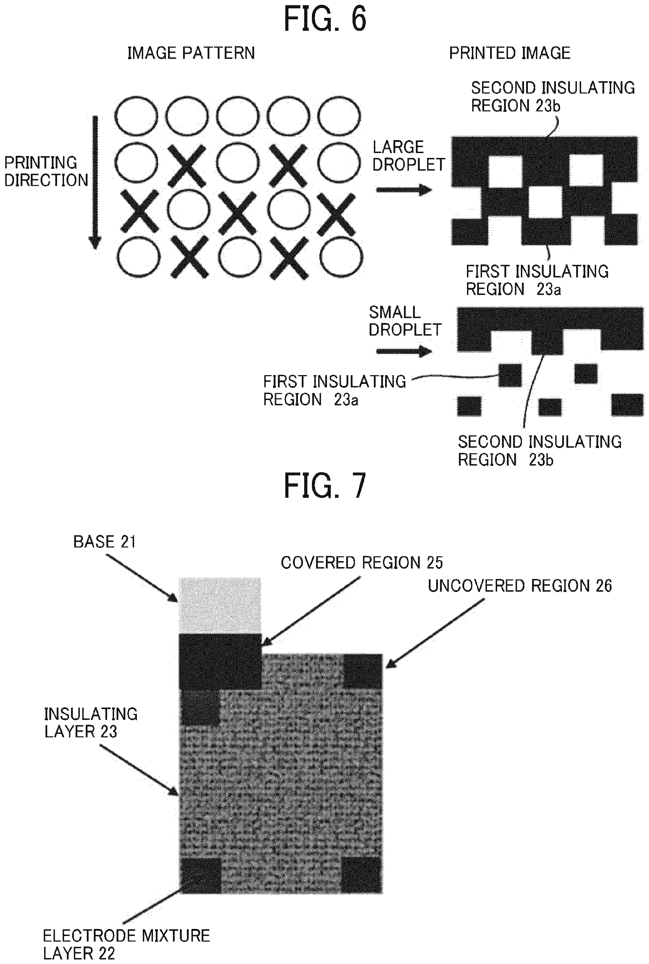

FIG. 6 is a diagram for explaining a change in an area ratio between the first insulating regions and the second insulating regions when a droplet amount changes in the same image pattern. The areas of first insulating regions 23a and second insulating regions 23b are different between a case where the image pattern illustrated in the left part of FIG. 6 is discharged by large droplets, as illustrated in the upper right part of FIG. 6, and a case where the image pattern is discharged by small droplets, as illustrated in the lower right part of FIG. 6. Specifically, discharging large droplets results in providing a larger area than discharging small droplets.

After the droplet amount to be discharged by the inkjet method is determined, decimation is performed in which the ratio of discharge nozzles and non-discharge nozzles among all nozzles is determined, so that the insulating layer can be formed in an intended target amount on the electrode mixture layer (hereinafter, an intended application amount per area in the unit of cm² is referred to as a "target amount"). A ratio of discharge nozzles to all nozzles is defined as a discharge rate.

When the liquid composition has excellent wettability with respect to the electrode mixture layer, if the droplet amount is increased, penetration into and wet-spreading over the electrode mixture layer occurs. To control the pattern of the formation region and non-formation region in the insulating layer according to a decimation pattern, it is preferable to determine the discharge rate in consideration of the wet-spreading of the liquid composition.

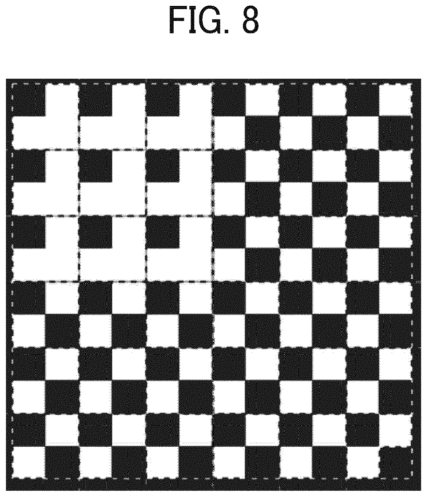

The decimation pattern may be a pattern that is uniform at all points in a plane, or may be a non-uniform pattern in which the discharge rate is high in a portion and low in another portion. Using a non-uniform pattern may provide the advantages of both a high discharge rate and a low discharge rate, such as satisfying both battery performance and safety. An example of the non-uniform pattern is illustrated in FIG. 8.

In a case where formation regions and non-formation regions are provided on the electrode mixture layer according to the decimation pattern, the formation regions are classified into first insulating regions, each of which is an independent region formed by droplets discharged from one nozzle, and second insulating regions, each of which is a coupled region in which droplets discharged from adjacent nozzles and impacted on the electrode mixture layer are joined together by wet-spreading. In general, if the discharge rate is low, the ratio of the first insulating regions, each of which is an independent region, tends to increase, and if the discharge rate is high, the ratio of the second insulating regions, each of which is a coupled region, tends to increase.

However, even if the same decimation pattern (discharge rate) is used, if the droplet amount is increased, the droplets wet-spread more over the electrode mixture layer, so that the proportion of the second insulating regions, each of which is a coupled region, increases.

In one aspect of the present disclosure, it is preferable that, in each of the second insulating regions, the maximum length of a line segment passing through the center of gravity of the second insulating region and having both ends in contact with the outer periphery of the second insulating region exceeds 500 µm.

According to this aspect, a two-dimensional gap between the first insulating region, which is an independent region, and the second insulating region, which is a coupled region, is greater than 500 µm, so that a network of insulating layers is formed on the electrode mixture layer, and thus, safety can be ensured. In the present embodiment and the scope of claims, the center of gravity of the insulating layer is a point located within the insulating layer and corresponds to the center of gravity of a plate-shaped object that is made of a material having a uniform mass per unit area and has the same planar shape as the planar shape of the target insulating layer when viewed from above. The center of gravity can also be described as an intersection point of a first straight line and a second straight line, each bisecting the area of the planar shape of the target insulating layer viewed from above and having a different angle.

In one aspect of the present disclosure, the area of the second insulating region, which is a coupled region, is preferably 8,000 µm² or more, and more preferably 10,000 µm² or more and 40,000 µm² or less. According to this aspect, the two-dimensional gap between the first insulating region, which is an independent region, and the second insulating region, which is a coupled region, includes the second insulating region, which is a coupled region having an area of 8,000 µm² or more, so that a network of insulating layers is formed on the electrode mixture layer, and thus, safety can be improved.

For example, the area of the second insulating region, which is a coupled region, can be measured by image observation using an optical microscope or an electron microscope, elemental mapping using energy dispersive X-ray spectroscopy (EDS), or the like.

In one aspect of the present disclosure, the electrode mixture layer includes a covered region in which any square region having sides of 500 µm or more is covered by the first insulating region and/or the second insulating region, the electrode further includes a current collecting portion, and the covered region is provided around the current collecting portion. According to this aspect, even if a separator shrinks in a temperature rise test, it is possible to prevent current collecting portions facing each other on the base from short-circuiting. In the present specification and the scope of the claims, the cover ratio of the covered region is not particularly limited, as long as the cover ratio is within a range where the effect is achieved, and the cover ratio is preferably 95% or more, more preferably 98% or more, and still more preferably 100%.

In one aspect of the present disclosure, the electrode mixture layer includes an uncovered region in which any square region having sides of 500 µm or more is not covered by the first insulating region and/or the second insulating region, and the uncovered regions is provided at an end portion or a corner portion of the electrode mixture layer. According to this aspect, for example, an adhesive is applied into a gap in the second insulating region generated when the electrode mixture layer and a separator are superimposed on one another. Even if the separator shrinks in a temperature rise test, the adhesive suppresses the shrinkage of the separator, and thus, it is possible to prevent a short circuit and improve the safety. In the present specification and the scope of the claims, the cover ratio of the uncovered region is not particularly limited, as long as the cover ratio is within a range where the effect is achieved, and the cover ratio is preferably 5% or less, more preferably 2% or less, and still more preferably 0%.

The adhesive for suppressing the shrinkage of the separator is not particularly limited and can be appropriately selected according to a purpose. Examples of the adhesive include, but are not limited to, aqueous adhesives, in which a resin is dispersed in water, such as an epoxy resin, polyvinyl acetate, and a nitrile rubber; solution-based adhesives, in which a resin is dissolved in a solvent, such as a phenolic resin, vinyl acetate, and a chloroprene rubber; solvent-free adhesives, which cure in a chemical reaction, such as an epoxy resin, an acrylic resin, and a silicone rubber; and solid type adhesives such as an epoxy resin and a styrene-butadiene rubber.

FIG. 7 is an illustration of a base in which a covered region and an uncovered region are provided in an insulating layer on an electrode mixture layer.

In FIG. 7, reference numeral 21 represents the base, reference numeral 22 represents the electrode mixture layer, reference numeral 23 represents the insulating layer, reference numeral 25 represents the covered region, and reference numeral 26 represents the uncovered region.

In the present disclosure, the square region having sides of 500 µm or more in at least any one location of the electrode preferably includes a covered region provided in a range of 90% or more of the formation region and an uncovered region provided in a range of 10% or less of the formation region, that is, formed by a non-formation region. In the covered region, the formation region is preferably 95% or more, more preferably 98% or more, and still more preferably 100%. In the uncovered region, the formation region is preferably 5% or less, more preferably 2% or less, and still more preferably 0%.

### <Insulating Layer>

In the present disclosure, if an insulating layer containing insulating particles is provided on the electrode mixture layer, a positive electrode and a negative electrode are physically insulated and when the physical insulation is improved, the safety in high temperature use and in a nail penetration test is improved. In a case where the insulating layer is not provided, if a hole is formed in the separator due to foreign matter or the like, causing a short circuit between electrode mixture layers facing each other, an excessive current may flow through a short circuit point, resulting in the generation of Joule heat. In that case, the Joule heat melts or shrinks the separator in the vicinity of the short circuit point, so that the hole expands, a short-circuit area further increases, and the generation of Joule heat continues, which may cause abnormal heat generation and changes in appearance.

In an electrochemical element according to the present disclosure, even if a hole is formed in the separator and a short circuit occurs between the electrode mixture layers, the presence of the insulating layer prevents the short circuit area from increasing. Moreover, even if the electrode mixture layer is short-circuited in a location not covered by the insulating layer, the short-circuit current can be reduced, so that it is possible to suppress the generation of Joule heat and prevent a temperature rise.

The insulating layer is formed by applying a liquid composition containing insulating particles onto the electrode mixture layer.

The liquid composition containing insulating particles contains the insulating particles and a solvent, preferably contains an auxiliary solvent, a dispersant, and a binder, and further contains other components if desired.

### - Insulating Particles -

The insulating particles are not particularly limited and can be appropriately selected according to a purpose, as long as the insulating particles are particulate materials having high insulating properties and heat resistance. Examples of the insulating particles include, but are not limited to, aluminum oxide, silica, calcium carbonate, titanium oxide, calcium phosphate, titanium oxide, silicon oxide, and zirconium oxide. Each of these may be used alone or in combination with others. Among these materials, alumina is preferable in terms of having high insulating properties and heat resistance.

An electrochemical element manufactured using the liquid composition containing alumina is excellent in terms of safety and service life of the electrochemical element. Alumina has excellent wettability with respect to electrolytes, and thus, the absorption rate of the electrolyte increases, so that the cycle performance of the electrochemical element can be improved.

The type of alumina is not particularly limited and can be appropriately selected according to a purpose. Examples of the type of alumina include, but are not limited to, α-alumina, γ-alumina, β-alumina, and fused alumina. Each of these may be used alone or in combination with others. Among these types of alumina, α-alumina is preferable from the viewpoint of insulating properties and abrasion resistance. In a case of using two or more types of alumina, the major component of alumina is preferably α-alumina. Here, the major component being α-alumina means that the content of α-alumina in the total alumina is 50 mass% or more. The content of α-alumina in the total alumina is preferably 60 mass% or more, and more preferably 70 mass% or more.

The content of alumina is preferably 20 mass% or more and 55 mass% or less, more preferably 25 mass% or more and 52 mass% or less, and still more preferably 35 mass% or more and 50 mass% or less, based on the total amount of the liquid composition. The content of alumina indicates a high solid component concentration as compared to liquid compositions such as ink suitable for application on paper. By setting the content of alumina in such a range, unevenness in the thickness of a coated film after drying can be suppressed.

### - Solvent -

The solvent is not particularly limited and can be appropriately selected according to the purpose, but is preferably a solvent having affinity to the insulating particles.

Examples of the solvent include, but are not limited to, lactams, alcohols, sulfoxides, esters, and ketones. Each of these may be used alone or in combination with others.

Examples of the lactams include, but are not limited to, 1-methyl-2-pyrrolidone and 2-pyrrolidone.

Examples of the alcohols include, but are not limited to, isopropyl alcohol, butanol, and diacetone alcohol.

An example of the sulfoxides includes, but is not limited to, dimethyl sulfoxide.

Examples of the esters include, but are not limited to, ethyl acetate, butyl acetate, ethyl lactate, and ethylene glycol diacetate.

Examples of the ketones include, but are not limited to, diisobutyl ketone, 2-butanone, 2-pentanone, and diacetone alcohol.

### - Auxiliary Solvent -

The liquid composition may contain, if desired, one or more different types of auxiliary solvents for the purpose of supplementing a function lacking in the solvent. Examples of the auxiliary solvent include, but are not limited to, a solvent having a function of dispersing insulating particles, a solvent having a high boiling point for the purpose of preventing drying of a nozzle of a liquid discharge head, a solvent for the purpose of adjusting the viscosity and the surface tension to be suitable for discharging the liquid composition from the liquid discharge head, and a solvent for the purpose of suppressing the absorption of alumina particles into the electrode mixture layer.

The auxiliary solvent is not particularly limited and can be appropriately selected according to a purpose, but is preferably a solvent having an affinity for alumina.

Examples of the auxiliary solvent include, but are not limited to, ethers, glycols, esters, alcohols, and lactams. Each of these may be used alone or in combination with others.

An example of the ethers includes, but is not limited to, propylene glycol monopropyl ether.

Examples of the glycols include, but are not limited to, propylene glycol, ethylene glycol, triethylene glycol, and hexylene glycol.

Examples of the esters include, but are not limited to, ethyl lactate, ethylene carbonate, and ethylene glycol diacetate.

Examples of the alcohols include, but are not limited to, cyclohexanol and propylene glycol monopropyl ether.

An example of the lactams includes, but is not limited to, 2-pyrrolidone.

The content of the auxiliary solvent is not particularly limited and can be appropriately selected according to a purpose.

### - Dispersant -

The dispersant is a compound that adsorbs or bonds to the surfaces of insulating particles and has a function of suppressing aggregation of insulating particles by electrostatic repulsion from Coulomb forces or steric hindrance by molecular chains.

The number average molecular weight of the dispersant is not particularly limited and can be appropriately selected according to a purpose, but is preferably 1,000 or more and 100,000 or less. The number average molecular weight is more preferably 1,000 or more and 10,000 or less, and still more preferably 1,000 or more and 5,000 or less from the viewpoint of suppressing an increase in the viscosity of the liquid composition.

The dispersant preferably includes a dispersive group. For example, in a case of using the liquid composition as an electrode material of an electrochemical element, the dispersive group is preferably a nonionic group from the viewpoint of ionic conductivity. Here, nonionic refers to having no ionicity, and a nonionic group refers to a substituent having no ionicity.

The dispersive group is not particularly limited, as long as the dispersive group has a structure that is soluble in the solvent and the auxiliary solvent. However, in the case of using the liquid composition in an electrochemical element, the dispersive group is preferably an oligoether group from the viewpoint of ionic conductivity. The oligoether group indicates a group obtained by removing a hydroxyl group from an end of an ethylene glycol or propylene glycol polymer.

The number average molecular weight of the ethylene glycol or propylene glycol polymer is preferably 100 or more and 10,000 or less, and more preferably 100 or more and 5,000 or less. If the number average molecular weight of the ethylene glycol or propylene glycol polymer is 100 or more, it is possible to improve the dispersibility of the insulating particles in the liquid composition. If the number average molecular weight is 10,000 or less, it is possible to suppress an increase in viscosity of the liquid composition.

A method of measuring the number average molecular weight is not particularly limited and can be appropriately selected according to a purpose. For example, the number average molecular weight can be measured by gel permeation chromatography.

The end on the side to which the oligoether group is not bound may be a hydroxyl group, a methoxy group, an ethoxy group, a propoxy group, or the like. If a dispersant having an oligoether group is used, it is possible to improve the dispersibility of the insulating particles even when using a highly polar solvent.

From the viewpoint of the adsorption strength to the insulating particles, the dispersant is preferably a polymeric dispersant including an ionic group having opposite polarity to the polarity with which the insulating particles as an adsorptive group are charged.

Commercially available dispersants can be used as the polymeric dispersant. Examples of the commercially available dispersants include, but are not limited to, DISPERBYK (registered trademark) -103, DISPERBYK-118, and DISPERBYK-2155 (manufactured by BYK-Chemie); NOPCOSPERSE (registered trademark) -092, SN-SPERSE-2190, and SN-DISPERSANT-9228 (manufactured by San Nopco Co., Ltd.); and ESLEAM (registered trademark) AD-3172M, ESLEAM 2093, MALIALIM (registered trademark) AKM-0513, MALIALIM HKM-50A, MALIALIM HKM-150A, MALIALIM SC-0505K, MALIALIM SC-1015F, and MALIALIM SC-0708A (manufactured by NOF Corporation). Each of these may be used alone or in combination with others.

The content of the polymeric dispersant is not particularly limited and can be appropriately selected according to a purpose. However, the content of the polymeric dispersant is preferably 0.01 mass% or more and 10 mass% or less with respect to the insulating particles, and more preferably 0.1 mass% or more and 10 mass% or less, from the viewpoint of the dispersibility of the insulating particles.

### - Binder -

The liquid composition may contain a binder, if desired. By applying the liquid composition containing the binder onto the electrode mixture layer, the strength of the insulating layer can be improved.

The binder is not particularly limited and can be appropriately selected according to a purpose. Examples of the binder include, but are not limited to, polyvinylidene fluoride, styrene-butadiene rubber, and acrylic resins.

Each of these may be used alone or in combination with others. The binder may be dissolved or dispersed in the liquid composition.

A binder precursor may be used instead of the binder. An example of the binder precursor includes, but is not limited to, monomers. A liquid composition containing such monomers and further containing, if desired, a polymerization initiator, is applied onto the electrode mixture layer and then heated or irradiated with light to polymerize the monomers, so that the strength of a functional film can be improved.

### - Other Components -

The liquid composition containing insulating particles may further contain other components according to purposes such as adjustment of viscosity, adjustment of surface tension, control of solvent evaporation, improvement of additive solubility, improvement of insulating particle dispersibility, and sterilization. Examples of the other components include, but are not limited to, surfactants, pH adjusters, rust inhibitors, antiseptics, anti-mold agents, antioxidants, anti-reduction agents, evaporation accelerators, and chelating agents.

A well-known dispersing device can be used to disperse the liquid composition containing insulating particles. Examples of the dispersing device include, but are not limited to, stirrers, ball mills, bead mills, ring mills, high-pressure dispersers, rotary highspeed shearing devices, and ultrasonic dispersers.

The insulating layer is formed by applying the liquid composition containing insulating particles onto the electrode mixture layer.

A method of applying the liquid composition containing insulating particles is not particularly limited and can be appropriately selected according to a purpose. A liquid discharge method such as an inkjet discharge method is preferable, because a discharge position can be controlled and the liquid composition can be applied without contacting the electrode.

Examples of a method of discharging the liquid composition in the liquid discharge method include, but are not limited to, a method of applying mechanical energy to the liquid composition and a method of applying thermal energy to the liquid composition. Among these, the method of applying mechanical energy to the liquid composition is preferable from the viewpoint of dispersion stability.

An example of the method of applying mechanical energy includes, but is not limited to, a piezo method in which a voltage is applied to a piezo element in close contact with a liquid chamber to deform the liquid chamber and thus discharge a liquid composition from a nozzle.

An example of the method of applying thermal energy includes, but is not limited to, a thermal method in which heat is rapidly applied to a liquid composition by a heater or the like to boil the liquid composition and utilize bubbles thus generated.

In the case of using the liquid discharge method, a technique using a liquid discharge principle of a well-known liquid discharge apparatus may be applied. In this case, it is preferable to use a solvent to which a channel and a nozzle of a liquid discharge head installed in the liquid discharge apparatus are resistant.

### <Base>

A material included in the base is not particularly limited, as long as the material is conductive and stable with respect to a potential to be applied. The base includes a negative electrode base for manufacturing a negative electrode and a positive electrode base for manufacturing a positive electrode.

### <Electrode Mixture Layer>

The electrode mixture layer is laminated on the above-described base. It is preferable that a method of manufacturing the electrode mixture layer by using the liquid composition further includes a step of pressing the base with the liquid composition discharged thereon. As a result, the electrode constituents are less likely to peel off and the reliability of the device formed by using the electrode material is improved. The electrode mixture layer includes a negative electrode and a positive electrode.

### - Negative electrode -

In the negative electrode, a negative electrode mixture layer including a negative electrode active material and a polymer, is formed on one side of a negative electrode base. The negative electrode mixture layer may be formed on both sides of the negative electrode base.

The shape of the negative electrode is not particularly limited, and an example thereof includes, but is not limited to, a flat plate shape. Examples of the material forming the negative electrode base include, but are not limited to, stainless steel, nickel, aluminum, and copper.

A method of manufacturing the negative electrode includes a step of discharging a liquid composition onto a base by using a liquid discharge apparatus.

The liquid composition includes a negative electrode active material, a dispersion medium (solvent), and a polymer. The liquid composition is stored in a tank and supplied from the tank to the liquid discharge head via a tube.

The liquid discharge apparatus may be provided with a mechanism for capping the nozzles of the liquid discharge head to prevent drying of the liquid composition when the liquid composition is not discharged from the liquid discharge head.

When manufacturing the negative electrode, the negative electrode base is placed on a heatable stage, droplets of the liquid composition are discharged onto the negative electrode base, and then, the liquid composition is heated. At this time, the stage may be moved, and the liquid discharge head may be moved.

When the liquid composition discharged onto the negative electrode base is heated, the liquid composition may be heated by the stage or by a heating mechanism other than the stage.

The heating mechanism is not particularly limited, as long as the heating mechanism does not directly contact the liquid composition. Examples of the heating mechanism include, but are not limited to, a resistance heater, an infrared heater, and a fan heater. A plurality of heating mechanisms may be provided.

The heating temperature is not particularly limited, as long as the dispersion medium can be volatilized at the heating temperature, and the heating temperature is preferably in a range from 70°C to 150°C from the viewpoint of power consumption.

When the liquid composition discharged onto the negative electrode base is heated, the liquid composition may be irradiated with ultraviolet light.

### - Positive Electrode -

In the positive electrode, a positive electrode mixture layer including a positive electrode active material and a polymer, is formed on a positive electrode base. The positive electrode mixture layer may be formed on both sides of the positive electrode base.

The shape of the positive electrode is not particularly limited, and an example thereof includes, but is not limited to, a flat plate shape. Examples of the material forming the positive electrode base include, but are not limited to, stainless steel, aluminum, titanium, and tantalum.

A method of manufacturing the positive electrode is similar to the method of manufacturing the negative electrode. The liquid composition for forming the positive electrode mixture layer includes a positive electrode active material, a dispersion medium (solvent), and a polymer.

### (Method of Manufacturing Electrode and Apparatus for Manufacturing Electrode)

A method of manufacturing an electrode according to the present disclosure is a method of manufacturing the electrode according to the present disclosure, and includes:
a discharge step of discharging a liquid composition from a discharge unit including a plurality of discharge ports; and
a control step of controlling the discharge of the liquid composition, and further includes other steps, if desired.

The above-described liquid composition containing insulating particles is used as the liquid composition.

Examples of the other steps include, but are not limited to, an electrode mixture layer forming step of forming an electrode mixture layer on a base.

In the present disclosure, control is performed so that the liquid composition is discharged from one discharge port among the plurality of discharge ports and the liquid composition is not discharged from another discharge port.

The control step preferably includes controlling a discharge amount of the liquid composition discharged from the one discharge port to be 3 pL or more and 10 pL or less per discharge.

If the discharge amount is less than 3 pL, it is difficult to form uniform droplets to be discharged, and there is a concern that an intended insulating layer may not be formed due to drying of the droplets until the droplets impact on the electrode mixture layer. If the discharge amount is more than 10 pL, the solvent permeates into the electrode mixture layer after the droplets impact on the electrode mixture layer, leading to swelling of the electrode mixture layer and film unevenness of the insulating layer.

An apparatus for manufacturing an electrode according to the present disclosure is an apparatus for manufacturing the electrode according to the present disclosure, and includes:
a discharge unit including a plurality of discharge ports configure to discharge a liquid composition; and
a control unit configured to control discharge of the liquid composition from the discharge unit, and further includes other units, if desired.

The above-described liquid composition containing insulating particles is used as the liquid composition.

Examples of the other units include, but are not limited to, an electrode mixture layer forming unit that forms an electrode mixture layer on a base.

In the present disclosure, the control unit performs control so that the liquid composition is discharged from one discharge port among the plurality of discharge ports and the liquid composition is not discharged from another discharge port.

The control unit preferably controls a discharge amount of the liquid composition discharged from the one discharge port to be 3 pL or more and 10 pL or less per discharge.

If the discharge amount is less than 3 pL, it is difficult to form uniform droplets to be discharged, and there is a concern that an intended insulating layer may not be formed due to drying of the droplets until the droplets impact on the electrode mixture layer. If the discharge amount is more than 10 pL, the solvent permeates into the electrode mixture layer after the droplets impact on the electrode mixture layer, leading to swelling of the electrode mixture layer and film unevenness of the insulating layer.

### [Embodiment in which Liquid Composition Containing Insulating Particles is Directly Discharged onto Printing Base (Electrode Including Electrode Mixture Layer on Base) to Form Insulating Layer]

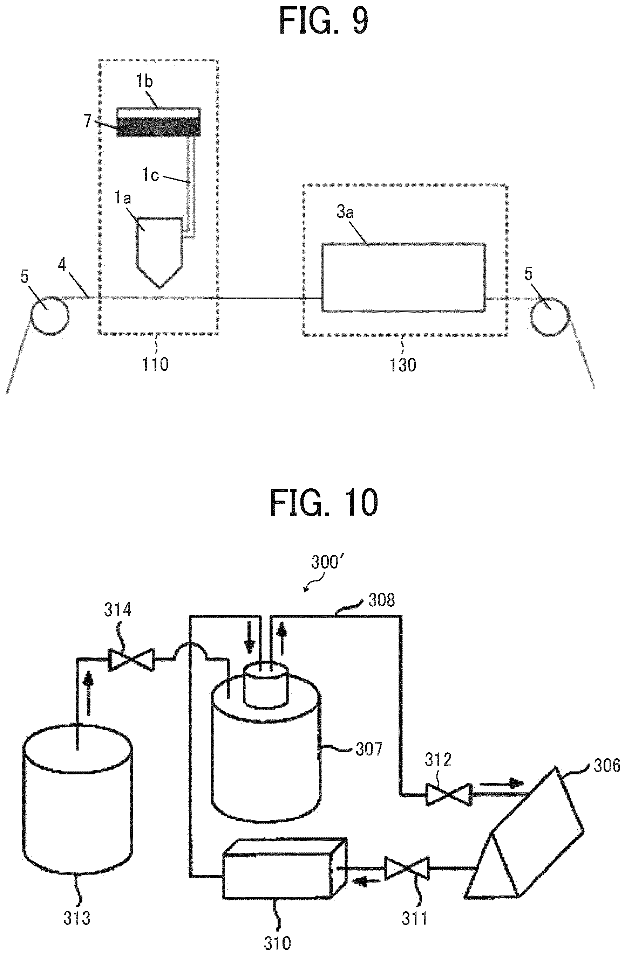

FIG. 9 is a schematic diagram illustrating an apparatus (liquid discharge apparatus) for manufacturing an electrode for performing an electrode manufacturing method of the present embodiment.

The apparatus for manufacturing an electrode is an apparatus for manufacturing an electrode by using the above-described liquid composition containing insulating particles. The apparatus for manufacturing an electrode includes a printing portion 110 that performs an application step of applying a liquid composition onto a printing base (an electrode in which an electrode mixture layer is provided on a base) 4 to form a liquid composition layer, and a heating portion 130 that performs a heating step of heating the liquid composition layer and removing liquid remaining in the liquid composition layer to obtain an insulating layer. The apparatus for manufacturing an electrode includes a conveyance portion 5 that conveys the printing base 4, and the conveyance portion 5 sequentially conveys the printing base 4 at a pre-set speed to the printing portion 110 and the heating portion 130, in this order.

### - Printing Portion 110 -

The printing portion 110 includes a printing device 1a, which is an example of an application unit that performs the application step of applying the liquid composition onto the printing base (electrode including the electrode mixture layer provided on the base) 4, a storage container 1b that contains the liquid composition, and a supply tube 1c that supplies the liquid composition stored in the storage container 1b to the printing device 1a.

The storage container 1b contains a liquid composition 7, and the printing portion 110 discharges the liquid composition 7 from the printing device 1a and applies the liquid composition 7 onto the printing base 4 to form a liquid composition layer in a thin film shape. The storage container 1b may be integrated with the apparatus for manufacturing an electrode, or may be removable from the apparatus for manufacturing an electrode. The storage container 1b may be a container used for addition to a storage container integrated with the apparatus for manufacturing an electrode or a storage container removable from the apparatus for manufacturing an electrode.

Any storage container 1b and supply tube 1c which can stably store and supply the liquid composition 7, may be selected. A material forming the storage container 1b and the supply tube 1c preferably has a light-shielding property in a relatively short wavelength region of ultraviolet and visible light. Thus, if the liquid composition 7 contains a polymerizable compound, the polymerizable compound is prevented from being polymerized by outside light.

### - Heating Portion 130 -

As illustrated in FIG. 9, the heating portion 130 includes a heating device 3a, and performs a liquid removal step of heating, by the heating device 3a, the liquid composition layer formed by the printing portion 110 to dry and remove liquid remaining in the liquid composition layer. As a result, an insulating layer can be formed. The heating portion 130 may remove the liquid under reduced pressure.

If the liquid composition 7 contains a polymerizable compound, the heating portion 130 may perform a polymerization acceleration step of heating the liquid composition layer by the heating device 3a to further accelerate the polymerization reaction, and an initiator removal step of removing a photopolymerization initiator remaining in the liquid composition layer by heating and drying with the heating device 3a. The polymerization acceleration step and the initiator removal step may not be implemented at the same time as the liquid removal step, but may be implemented before or after the liquid removal step.

If the liquid composition 7 contains a polymerizable compound, the heating portion 130 may perform, after the liquid removal step, a polymerization completion step of heating the liquid composition layer under reduced pressure. The heating device 3a is not particularly limited, as long as the heating device 3a satisfies the above-described functions, and examples thereof include, but are not limited to, an IR heater and a hot air heater.

It is possible to appropriately select a heating temperature and a time period according to the boiling point of the liquid included in the liquid composition layer or the thickness of the formed film.

FIG. 10 is a schematic diagram illustrating another apparatus for manufacturing an electrode (liquid discharge apparatus) for performing an electrode manufacturing method of the present embodiment.

A liquid discharge apparatus 300' may control a pump 310 and valves 311 and 312 to circulate the liquid composition in a liquid discharge head 306, a tank 307, and a tube 308.

The liquid discharge apparatus 300' includes an external tank 313, and when the liquid composition in the tank 307 is decreased, it is also possible to supply a liquid composition from the external tank 313 to the tank 307 by controlling the pump 310 and valves 311, 312, and 314.

The apparatus for manufacturing an electrode can be used to precisely discharge the liquid composition onto a target object.

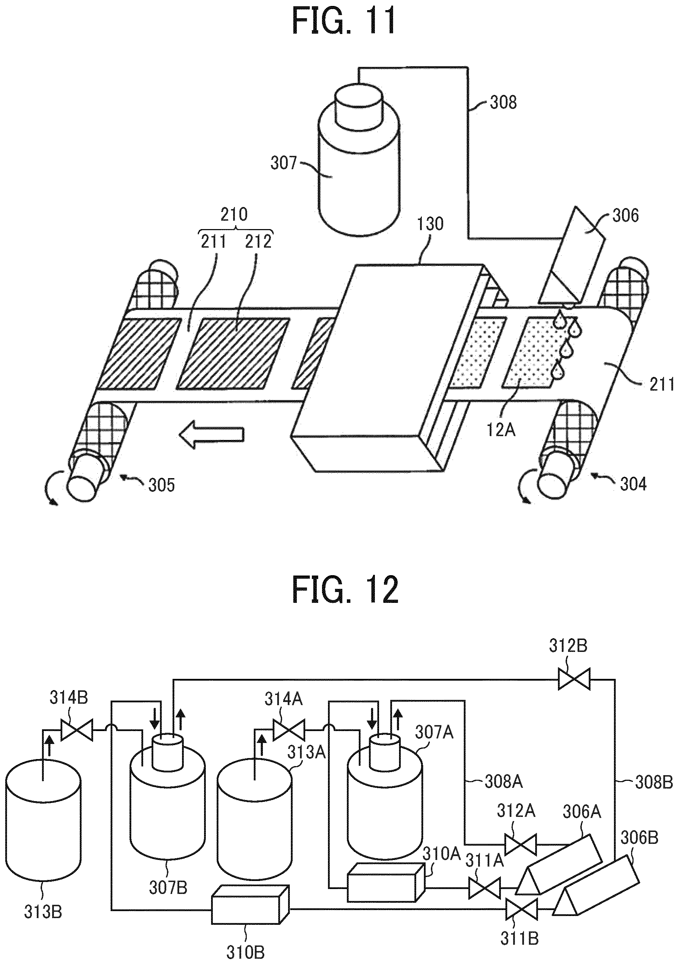

FIG. 11 is an illustration of another example of the electrode manufacturing method of the present embodiment.

A method of manufacturing an electrode 210 including an insulating layer on a printing base (an electrode including an electrode mixture layer on a base) includes a step of sequentially discharging a liquid composition 12A containing the insulating particles onto the printing base 211 by using the liquid discharge apparatus 300'.

First, a printing base 211 having an elongated shape is prepared. The printing base 211 is wound around a cylindrical core, and set on a feed roller 304 and a wind-up roller 305 so that the side on which the insulating layer is formed faces upward in FIG. 11. Here, the feed roller 304 and the wind-up roller 305 rotate counterclockwise, and the printing base 211 is conveyed from right to left in FIG. 11. Similarly to FIG. 9, droplets of the liquid composition 12A are discharged from the liquid discharge head 306 installed above the printing base 211 between the feed roller 304 and the wind-up roller 305, onto the printing base 211 that is sequentially conveyed.

A plurality of the liquid discharge heads 306 may be installed in a direction substantially parallel or substantially perpendicular to a conveyance direction of the printing base 211. Next, the printing base 211 onto which the droplets of the liquid composition 12A are discharged is conveyed to the heating portion 130 by the feed roller 304 and the wind-up roller 305. As a result, an insulating layer 212 is formed, and a laminated structure body 210 in which the insulating layer 212 is provided on the printing base 211 is obtained. After that, the laminated structure body 210 is cut into a desired size by punching processing or the like.

The heating portion 130 may be installed either above or below the printing base 211, or a plurality of the heating portions 130 may be installed.

Alternatively, as illustrated in FIG. 12, the tank 307 may be a tank 307A to which a liquid composition is supplied from a tank 313A connected to the tank 307A, and the liquid discharge head 306 may include a plurality of liquid discharge heads 306A and 306B. In FIG. 12, reference numerals 310A and 310B represent pump units, reference numerals 313A and 313B represent primary tanks, and reference numerals 307A and 307B represent secondary tanks. The liquid composition is supplied from the primary tanks 313A and 313B to the secondary tanks 307A and 307B using valves 314A and 314B, respectively, and further supplied to the liquid discharge heads 306A and 306B via supply pipes 308A and 308B, respectively. Valves 311A, 311B, 312A, and 312B are openable and closable as needed.

### [Embodiment in which Liquid Composition Layer or Insulating Layer are Indirectly Formed on Printing Base (Electrode Including Electrode Mixture Layer on Base)]

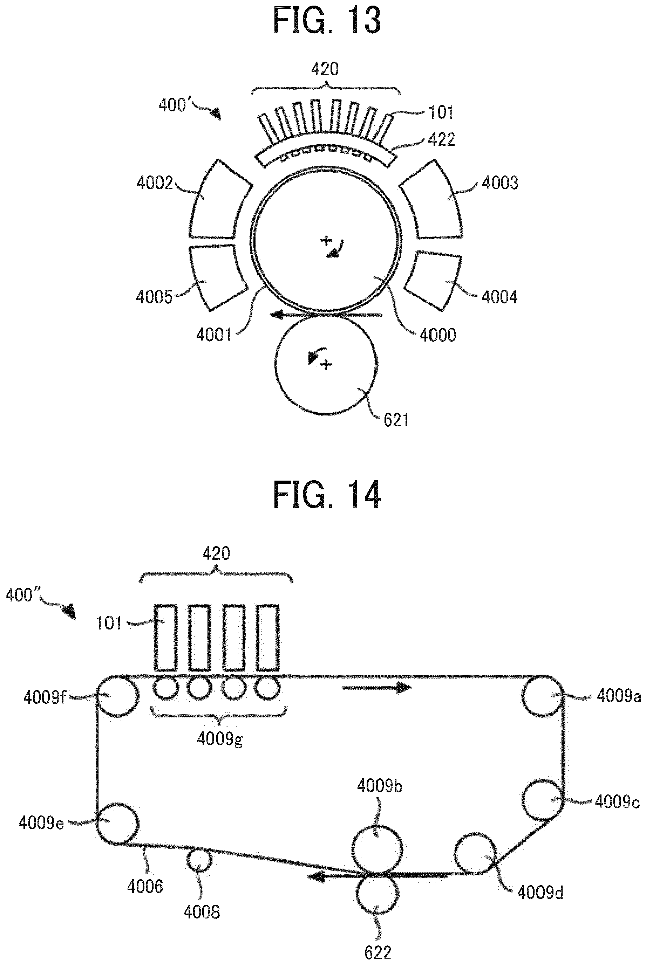

FIGs. 13 and 14 are configuration diagrams illustrating a printing portion as an application unit employing an inkjet method and a transfer method, as an example of an apparatus for manufacturing an electrode according to the present embodiment. FIG. 13 is a configuration diagram illustrating a printing portion using a drum-shaped intermediate transfer body. FIG. 14 is a configuration diagram illustrating a printing portion using an endless belt type intermediate transfer body.

A printing portion 400' illustrated in FIG. 13 is an inkjet printer in which a liquid composition layer or an insulating layer are transferred onto a printing base (an electrode in which an electrode mixture layer is provided on a base) via an intermediate transfer body 4001, to form a liquid composition layer or an insulating layer on the printing base.

The printing portion 400' includes an inkjet portion 420, a transfer drum 4000, a pretreatment unit 4002, an absorption unit 4003, a heating unit 4004, and a cleaning unit 4005.

The inkjet portion 420 includes a head module 422 holding a plurality of heads 101. Each of the heads 101 discharges a liquid composition onto the intermediate transfer body 4001 supported by the transfer drum 4000 to form a liquid composition layer on the intermediate transfer body 4001. Each of the heads 101 is a line head including nozzles arrayed in a range covering a width of a recording region of a printing base having the maximum usable size. The heads 101 each include, on a lower surface, a nozzle surface formed with nozzles, and the nozzle surface faces a surface of the intermediate transfer body 4001 with a small gap therebetween. In the case of the present embodiment, the intermediate transfer body 4001 is configured to circularly move on a circular path, and thus, the plurality of heads 101 are arranged radially.

The transfer drum 4000 faces an impression cylinder 621 and forms a transfer nip portion. For example, before the head 101 discharges the liquid composition, the pretreatment unit 4002 applies, onto the intermediate transfer body 4001, a reaction liquid for increasing the viscosity of the liquid composition. Before the transfer, the absorption unit 4003 absorbs a liquid component from the liquid composition layer on the intermediate transfer body 4001. Before the transfer, the heating unit 4004 heats the liquid composition layer on the intermediate transfer body 4001. By heating the liquid composition layer, the liquid contained in the liquid composition layer is removed and the transferability to the printing base is improved.

After the transfer, the cleaning unit 4005 cleans the intermediate transfer body 4001 to remove foreign substances such as ink and dust remaining on the intermediate transfer body 4001.

An outer peripheral surface of the impression cylinder 621 is pressed against the intermediate transfer body 4001, and when the base passes through the transfer nip portion between the impression cylinder 621 and the intermediate transfer body 4001, the insulating layer on the intermediate transfer body 4001 is transferred to the printing base. The impression cylinder 621 may include at least one gripping mechanism for holding a distal end portion of the base on the outer peripheral surface of the impression cylinder 621.

A printing portion 400" illustrated in FIG. 14 is an inkjet printer in which a liquid composition layer or an insulating layer are transferred onto a printing base (an electrode in which an electrode mixture layer is provided on a base) via an intermediate transfer belt 4006, to form a liquid composition layer or an insulating layer on the printing base.

The printing portion 400" discharges droplets of a liquid composition from the plurality of heads 101 provided in the inkjet portion 420 to form a liquid composition layer or an insulating layer on an outer peripheral surface of the intermediate transfer belt 4006. The liquid composition layer or the insulating layer formed on the intermediate transfer belt 4006 is formed into a film on the intermediate transfer belt 4006.

In the transfer nip portion where the intermediate transfer belt 4006 faces a transfer roller 622, the liquid composition layer or the insulating layer formed into a film on the intermediate transfer belt 4006 is transferred to the printing base. After the transfer, the surface of the intermediate transfer belt 4006 is cleaned by a cleaning roller 4008.

The intermediate transfer belt 4006 is stretched across a drive roller 4009a, an opposing roller 4009b, a plurality of (four in the present example) shape maintaining rollers 4009c, 4009d, 4009e, and 4009f, and a plurality of (four in the present example) support rollers 4009g, and the intermediate transfer belt 4006 moves in a direction of the arrow in FIG. 14. Each of the support rollers 4009g provided to face a corresponding one of the heads 101 maintains a tensed state of the intermediate transfer belt 4006 when ink droplets are discharged from the head 101.

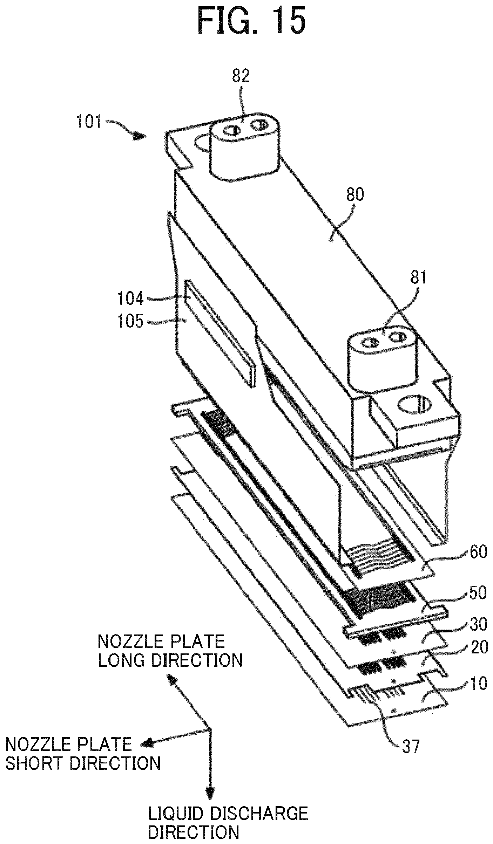

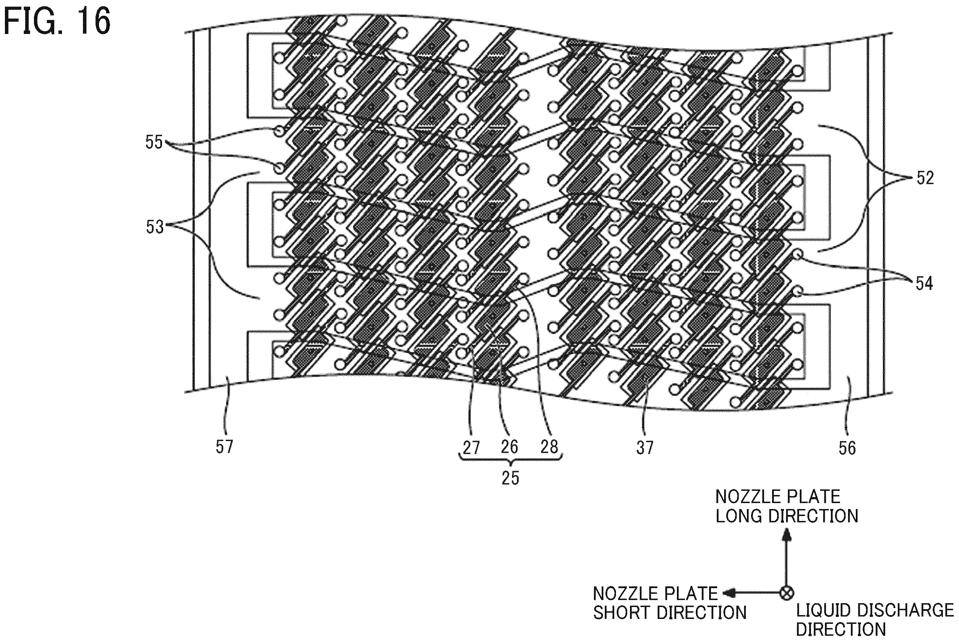

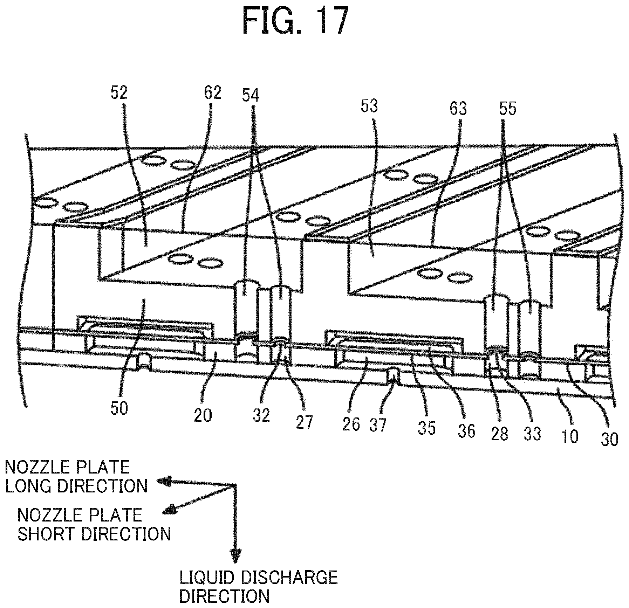

Next, a configuration of a liquid discharge head as an example of the application unit will be described with reference to FIGs. 15 to 17. FIG. 15 is an exploded schematic view of a liquid discharge head. FIG. 16 is an explanatory diagram illustrating a channel configuration of the liquid discharge head. FIG. 17 is a cross-sectional perspective view of the channel configuration of the liquid discharge head.

The head 101 includes a substrate (a flexible wiring substrate) 105 to which a nozzle plate 10, a channel plate (individual channel member) 20, a vibrating plate member 30, a common channel member 50, a damper member 60, a frame member 80, and a drive circuit 104 are mounted.

The nozzle plate 10 includes a plurality of nozzles 37 that discharge ink, and the plurality of nozzles 37 are aligned two-dimensionally in a nozzle plate short direction and in a nozzle plate long direction perpendicular to the nozzle plate short direction.

The channel plate 20 includes a plurality of liquid chambers (individual pressure chambers) 26 each communicating with a corresponding one of the plurality of nozzles 37, and a plurality of supply channels (individual supply channels) 27 and recovery channels (individual recovery channels) 28 each leading to a corresponding one of the plurality of liquid chambers 26. In the following description, for the sake of convenience, one liquid chamber 26 and a supply channel 27 and a recovery channel 28 leading to the one liquid chamber 26 are collectively referred to as an individual channel 25.

The vibrating plate member 30 forms a vibrating plate 35 which is a deformable wall surface of the liquid chamber 26, and the vibrating plate 35 is integrally provided with a piezoelectric element 36. The vibrating plate member 30 has a supply side opening 32 leading to the supply channel 27 and a recovery side opening 33 leading to the recovery channel 28. The piezoelectric element 36 deforms the vibrating plate 35 to pressurize the ink in the liquid chamber 26.

The channel plate 20 and the vibrating plate member 30 are not limited to being formed as separate members.

For example, it is possible to integrally form the channel plate 20 and the vibrating plate member 30 by using a Silicon on Insulator (SOI) substrate.

That is, by using an SOI substrate in which a silicon oxide film, a silicon layer, and a silicon oxide film are formed in this order on a silicon substrate, and using the silicon substrate as the channel plate 20, it is possible to form the vibrating plate 35 including the silicon oxide film, the silicon layer, and the silicon oxide film. In this configuration, the vibrating plate member 30 is formed by a layer structure including the silicon oxide film, the silicon layer, and the silicon oxide film of the SOI substrate. Thus, the vibrating plate member 30 includes a layer structure formed by a material film-formed on a surface of the channel plate 20.

The common channel member 50 is formed by alternately providing a plurality of common supply channel branches 52 communicating with two or more of the supply channels 27, and a plurality of common recovery channel branches 53 communicating with two or more of the recovery channels 28, adjacent to each other in the nozzle plate long direction. The common channel member 50 is formed with a through hole that serves as a supply port 54 communicating with the supply side opening 32 of the supply channel 27 and the common supply channel branch 52, and a through hole that serves as a recovery port 55 communicating with the recovery side opening 33 of the recovery channel 28 and the common recovery channel branch 53.

The common channel member 50 includes one or a plurality of common supply channel main branches 56 communicating with the plurality of common supply channel branches 52 and one or a plurality of common recovery channel main branches 57 communicating with the plurality of common recovery channel branches 53.

The damper member 60 includes a supply side damper 62 facing the supply port 54 of the common supply channel branch 52 and a recovery side damper 63 facing the recovery port 55 of the common recovery channel branch 53. The common supply channel branch 52 and the common recovery channel branch 53 are formed by sealing groove portions arrayed alternately in the common channel member 50, which is the same member as the common supply channel branch 52 and the common recovery channel branch 53, with the supply side damper 62 or the recovery side damper 63 of the damper member 60. A metal thin film or an inorganic thin film that is resistant to organic solvents is preferably used as a damper material of the damper member 60. The thickness of a portion of the damper member 60 forming the supply side damper 62 and the recovery side damper 63 is preferably 10 µm or less.

On the inner wall surfaces of the common supply channel branch 52 and the common recovery channel branch 53, and on the inner wall surfaces of the common supply channel main branch 56 and the common recovery channel main branch 57, a protective film is formed to protect the inner wall surfaces against ink flowing through the channels. For example, on the inner wall surfaces of the common supply channel branch 52 and the common recovery channel branch 53, and on the inner wall surfaces of the common supply channel main branch 56 and the common recovery channel main branch 57, a silicon oxide film is formed by heat treatment of the Si substrate. A tantalum silicon oxide film is formed on the silicon oxide film to protect the surface of the Si substrate against ink.

The frame member 80 includes, in an upper portion, a supply port 81 and a discharge port 82. The supply port 81 supplies ink to the common supply channel main branch 56, and the discharge port 82 discharges the ink discharged from the common recovery channel main branch 57.

As described above, the head 101 includes the nozzles 37 that discharge ink, the liquid chambers 26 leading to the nozzles 37, the supply channels 27 that supply ink to the liquid chambers 26, and the recovery channels 28 that recover ink from the liquid chambers 26. Here, the ink is an example of the "liquid composition," the head 101 is an example of the "liquid discharge head," each of the liquid chambers 26 is an example of the "liquid chamber," each of the supply channels 27 is an example of the "supply channel", and each of the recovery channels 28 is an example of the "recovery channel".

In the configuration of the head 101, the shape of the nozzle surface of the nozzle plate 10 (the surface on which the nozzles 37 are formed) is not limited to a rectangle, and may be a shape other than the rectangle such as a trapezoid, a rhombus, or a parallelogram.

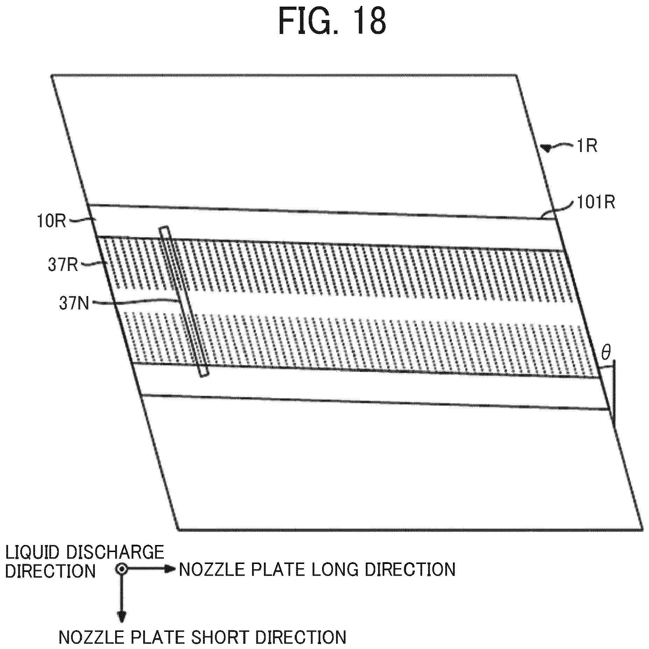

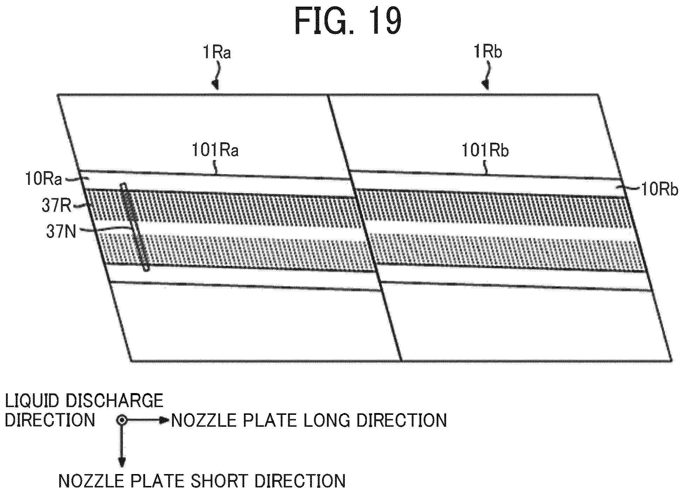

Examples of the shape of the nozzle surface will be described with reference to FIGs. 18 and 19. FIG. 18 is a configuration diagram illustrating a head including a parallelogramshaped nozzle plate, and FIG. 19 is an explanatory diagram illustrating a state where a plurality of the heads in FIG. 18 are aligned.

A head 1R has an outer shape (ridgeline) inclined at an angle θ with respect to the nozzle plate short direction, and a liquid discharge portion 101R and a nozzle plate 10R of the head 1R are also formed in a shape along the ridgeline.

That is, the liquid discharge portion 101R includes the nozzle plate 10R having a parallelogram as an outer shape, and a plurality of nozzles 37R are regularly arrayed two-dimensionally on the nozzle plate 10R. In the array of the nozzles 37R, for example, one nozzle row 37N includes N of the nozzles 37R, and a plurality of the nozzle rows 37N are arrayed in parallel to the ridgeline mentioned above, in the nozzle plate long direction perpendicular to the nozzle plate short direction.

As illustrated in FIG. 19, in the head 1R having the above-described configuration, a plurality of heads 1Ra and 1Rb may be aligned in one row in the nozzle plate long direction, so that it is possible to obtain a line head having a desired length in accordance with a recording width of the base to be used. The heads 1Ra and 1Rb include respective liquid discharge portions 101Ra and 101Rb and respective nozzle plates 10Ra and 10Rb.

### <Method of Manufacturing Electrochemical Element>

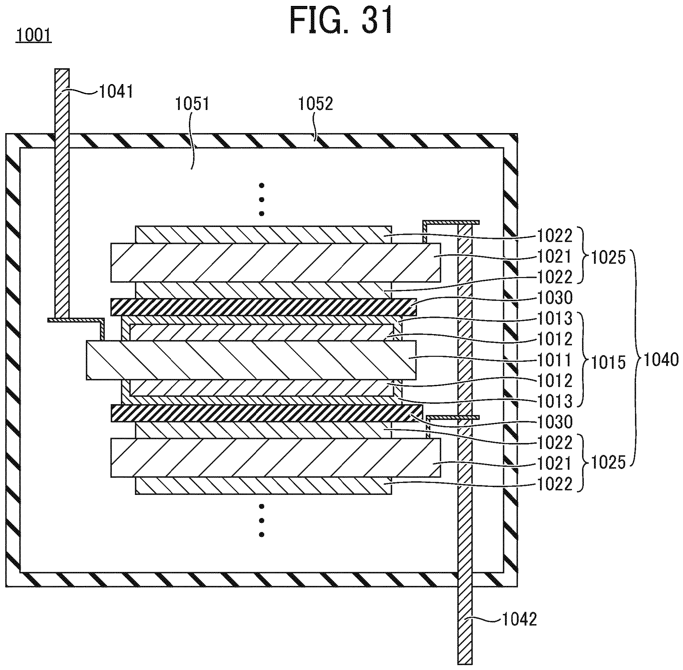

A method of manufacturing an electrochemical element includes a process of manufacturing an electrode using the above-described method of manufacturing an electrode. FIG. 31 is a schematic diagram of an electrochemical element 1001 manufactured by the method of manufacturing an electrochemical element according to the present embodiment.

The electrochemical element 1001 includes an electrode element 1040 and electrolyte layer 1051 comprising an electrolyte solution or a non-aqueous electrolyte, and is sealed with an exterior 52. Lead wires 1041 and 1042 are drawn out of the exterior 1052.

In the electrode element 1040, a negative electrode 1015 and a positive electrode 1025 are laminated with a separator 1030 interposed therebetween. Here, the positive electrode 1025 is laminated on both sides of the negative electrode 1015. The lead wire 1041 is connected to a negative electrode base 1011, and the lead wire 1042 is connected to a positive electrode base 1021.

The negative electrode 1015 is similar to the negative electrode described above, except that a negative electrode mixture layer 1012 and an insulating layer 1013 is formed on both sides of the negative electrode base 1011.

The positive electrode 1025 is similar to the positive electrode described above, except that a positive electrode mixture layer 1022 is formed on both sides of the positive electrode base 1021.

The number of layers of the negative electrode 1015 and the positive electrode 1025 in the electrode element 1040 is not particularly limited. The number of negative electrodes 1015 and the number of positive electrodes 1025 in the electrode element 1040 may be the same or different.

### - Separator -

The separator is interposed between the negative electrode and the positive electrode to prevent a short circuit between the negative electrode and the positive electrode.

The separator is not particularly limited and can be appropriately selected according to a purpose. Examples of the separator include, but are not limited to, paper such as kraft paper, vinylon mixed paper, and synthetic pulp mixed paper; polyolefin nonwoven fabric such as cellophane, polyethylene graft membrane, and polypropylene meltblown nonwoven fabric; polyamide nonwoven fabric; glass fiber nonwoven fabric; and micropore membrane.

The size of the separator is not particularly limited, as long as the separator has a size that can be used in an electrochemical element.

The separator may have a single-layer structure or a multi-layer structure. In the case of using a solid electrolyte, the separator may be omitted.

In the electrochemical element, an aqueous electrolyte solution or a non-aqueous electrolyte is injected into an electrode element to form an electrolyte layer, and the electrolyte layer is sealed with an exterior. In the electrochemical element, the lead wires are drawn out of the exterior.

The electrochemical element may include other members, if desired. The electrochemical element is not particularly limited, and an example thereof includes, but is not limited to, a lithium ion secondary battery.

The shape of the electrochemical element is not particularly limited and can be appropriately selected according to a purpose. Examples of the shape of the electrochemical element include, but are not limited to, a laminate type, a cylinder type in which a sheet electrode and a separator are formed in a spiral shape, a cylinder type having an inside-out structure in which a pellet electrode and a separator are combined, and a coin type in which a pellet electrode and a separator are laminated on one another.

### - Aqueous Electrolyte Solution -

An electrolyte salt included in the aqueous electrolyte solution is not particularly limited and can be appropriately selected according to a purpose. Examples of the electrolyte salt include, but are not limited to, sodium hydroxide, potassium hydroxide, sodium chloride, potassium chloride, ammonium chloride, zinc chloride, zinc acetate, zinc bromide, zinc iodide, zinc tartrate, and zinc perchloride.

### - Non-Aqueous Electrolyte -

Examples of the non-aqueous electrolyte include, but are not limited to, a solid electrolyte and a non-aqueous electrolyte solution. The non-aqueous electrolyte solution is an electrolyte solution in which an electrolyte salt is dissolved in a non-aqueous solvent.

The non-aqueous solvent is not particularly limited, and for example, an aprotic organic solvent is preferably used.

Examples of the aprotic organic solvent that may be used include, but are not limited to, carbonate-based organic solvents such as chain carbonates and cyclic carbonates. Among these, chain carbonates have a high ability for dissolving electrolyte salts and are thus preferably used. The aprotic organic solvent preferably has low viscosity.

Examples of the chain carbonates include, but are not limited to, dimethyl carbonate (DMC), diethyl carbonate (DEC), and methyl ethyl carbonate (EMC).

The content of the chain carbonates in the non-aqueous solvent is not particularly limited and can be appropriately selected according to a purpose, but is preferably 50 mass% or more.

If the content of the chain carbonates is 50 mass% or more in the non-aqueous solvent, even when a non-aqueous solvent other than the chain carbonates is a cyclic substance having a high dielectric constant (for example, a cyclic carbonate or a cyclic ester), the content of the cyclic substance is low. Therefore, even if a non-aqueous electrolyte solution having a high concentration of 2M or more is prepared, the viscosity of the non-aqueous electrolyte solution is low, and thus, excellent permeation of the non-aqueous electrolyte solution into the electrode and ion diffusion are obtained.

Examples of the cyclic carbonates include, but are not limited to, propylene carbonate (PC), ethylene carbonate (EC), butylene carbonate (BC), and vinylene carbonate (VC).

Examples of non-aqueous solvents other than the carbonate-based organic solvents include, but are not limited to, ester-based organic solvents such as cyclic esters and chain esters, and ether-based organic solvents such as cyclic ethers and chain ethers.

Examples of the cyclic esters include, but are not limited to, γ-butyrolactone (yBL), 2-methyl-γ-butyrolactone, acetyl-γ-butyrolactone, and γ-valerolactone.

Examples of the chain esters include, but are not limited to, propionic acid alkyl esters, malonic acid dialkyl esters, acetic acid alkyl esters (for example, methyl acetate (MA) and ethyl acetate), and formic acid alkyl esters (for example, methyl formate (MF) and ethyl formate).

Examples of the cyclic ethers include, but are not limited to, tetrahydrofuran, alkyltetrahydrofuran, alkoxytetrahydrofuran, dialkoxytetrahydrofuran, 1,3-dioxolane, alkyl-1,3-dioxolane, and 1,4-dioxolane.

Examples of the chain ethers include, but are not limited to, 1,2-dimethoxyethane (DME), diethyl ether, ethylene glycol dialkyl ether, diethylene glycol dialkyl ether, triethylene glycol dialkyl ether, and tetraethylene glycol dialkyl ether.

The electrolyte salt is not particularly limited, as long as the electrolyte salt has high ion conduction and can be dissolved in a non-aqueous solvent.

The electrolyte salt preferably contains a halogen atom. The electrolyte salt may include cations or anions.

An example of the cations included in the electrolyte salt includes, but is not limited to, lithium ions (lithium salt).

Examples of the anions included in the electrolyte salt include, but are not limited to, BF₄⁻, PF₆⁻, AsF₆⁻, CF₃SO₃⁻, (CF₃SO₂)₂N⁻, and (C₂F₅SO₂)₂N⁻.

The lithium salt is not particularly limited and can be appropriately selected according to a purpose.

Examples of the lithium salt include, but are not limited to, lithium hexafluorophosphate (LiPF₆), lithium fluoroborate (LiBF₄), lithium hexafluoroarsenate (LiAsF₆), lithium trifluoromethanesulfonate (LiCF₃SO₃), lithium bis(trifluoromethylsulfonyl)imide (LiN(CF₃SO₂)₂), and lithium bis(pentafluoroethylsulfonyl)imide (LiN(C₂F₅SO₂)₂). Each of these may be used alone or in combination with others. Among these, LiPF₆ is preferable from the viewpoint of ion conduction, and LiBF₄ is preferable from the viewpoint of stability.

The concentration of the electrolyte salt in the non-aqueous electrolyte solution is not particularly limited and can be appropriately selected according to a purpose. For example, the concentration of the electrolyte salt in the non-aqueous electrolyte solution is preferably from 1 mol/L to 2 mol/L in the case of a swing-type non-aqueous electrolyte power storage element, and from 2 mol/L to 4 mol/L in the case of a reservoir-type non-aqueous electrolyte power storage element.

### <Applications of Electrochemical Element>

Examples of applications of the electrochemical element include, but are not limited to, lithium ion secondary batteries, magnesium ion secondary batteries, sodium ion secondary batteries, and sodium secondary batteries.

Examples of applications of the electrochemical element include, but are not limited to, battery-equipped vehicles such as electric vehicles (EV) and plug-in hybrid vehicles (PHV), wearable devices such as head-mounted displays and smart watches, smartphones, laptop computers, pen-input computers, mobile computers, e-book players, mobile phones, portable facsimile machines, portable copiers, portable printers, headphone stereo players, camcorders, liquid crystal television sets, handy cleaners, portable CD players, mini disc players, transceivers, electronic notebooks, calculators, memory cards, portable tape recorders, radios, backup power supplies, motors, lighting equipment, toys, game machines, clocks, stroboscopes, and cameras.

Among these, the electrochemical element according to the present embodiment is preferably used for battery-equipped vehicles that include a large number of electrochemical elements and wearable devices that are in close contact with a body of a user.

When implementing the electrochemical element manufactured by the above-described method in a vehicle-mounted battery or in an electronic device, it is preferable to satisfy both a desirable battery performance and safety. An effect of the insulating layer on the battery performance and the safety will be described below.

Examples of performance indicators of the electrochemical element include, but are not limited to, electromotive force, discharge capacity, charge-discharge efficiency (discharge capacity/charge capacity), cycle characteristics (capacity retention rate after repeated charging), output density (energy extracted per unit time), energy density (energy extracted during use over a certain period of time), rate characteristics (energy extracted from a completely charged state until a discharged state at each discharge rate), float characteristics (electric capacity leaking while a completely charged state is maintained by an external current). Among these, the output density and the float characteristics are battery performances that have a great effect if an insulating layer is present.

To calculate the output density at each charging rate (for example, at a charging rate of 50%), a pulse having a current rate of 1C to 10C is used to perform discharge during 10 seconds. The electric power to reach a current value after discharge from a correlation line between a voltage after the pulse and a current value, is calculated to calculate an output (W). At this time, the presence of the insulating layer prevents ions from moving from the negative electrode to the positive electrode in the discharged state. In particular, if the insulating layer covers the entire surface of the electrode mixture layer, movement of ions is prevented, leading to a decrease in the output density. Therefore, it is possible to minimize a decrease in the output density by uniformly providing the non-formation region of the insulating layer in the electrode mixture layer.

If the electrochemical element is further charged in the completely charged state, the positive electrode is in an electrically unstable state.

In such an unstable state, if the separator and the positive electrode contact each other, ions are diverted from the separator, that is, the separator is oxidized, which results in an increase in resistance components. This causes leakage current, leading to a deterioration in each battery performance. At this time, the positive electrode mixture layer is covered with the insulating layer, and thus, oxidation of the separator can be suppressed. Therefore, to improve the float characteristics, it is preferable to provide the formation region on the positive electrode mixture layer in the insulating layer at a high cover ratio.

Due to external energy, deterioration of the separator, and the like, a short circuit may occur between the positive electrode and the negative electrode inside a battery, so that an excessive amount of ions moves, which generates Joule heat, and thus, may cause ignition from combustible materials such as an electrolyte solution. When implementing the electrochemical element in a vehicle-mounted battery or in an electronic device, it is preferable to prevent a short circuit between the positive electrode and the negative electrode, even if the separator shrinks or deteriorates due to heat generation. Providing the insulating layer on the electrode mixture layer makes it possible to prevent such a short circuit. Therefore, to improve the safety, it is preferable to provide the formation region on the positive electrode mixture layer in the insulating layer at a high cover ratio.

### EXAMPLES

Examples according to the present embodiment will be described below, but the present embodiment is in no way limited to such examples.

### (Example 1)

### <Preparation of Liquid Composition>

To prepare a mixed solvent, 11.28 parts by mass of hexylene glycol were added to 46.7 parts by mass of ethyl lactate. Subsequently, 2 parts by mass of a surfactant (DISPERBYK (registered trademark)-2155, manufactured by BYK-Chemie) and 40 parts by mass of α-alumina (AES-11C, manufactured by Sumitomo Chemical Co., Ltd.) were added to the mixed solvent and the resulting mixture was stirred.

Next, 12 parts by mass of zirconia beads having a diameter of 0.2 mm (YTZ-0.2, manufactured by Nikkato Co., Ltd.) were added, and a stirring device (rotation/revolution nano crusher NP-100, manufactured by Thinky Corp.) was used to stir the resulting mixture at a rotation speed of 1,500 rpm and a temperature of -20°C for 1 minute. After that, the mixture was passed through a 25 µm filtration filter (nylon mesh #419, manufactured by Kurebaa Co., Ltd.) to remove the zirconia beads and prepare a liquid composition.

### <Preparation of Positive Electrode>

To prepare an electrode paint for forming the positive electrode mixture layer, 93 parts by mass of lithium nickel cobalt manganese (NCM 622, manufactured by Beijing Toben Co., Ltd.), 3 parts by mass of conduction assisting agents (KETJENBLACK, manufactured by Lion Specialty Chemicals Co., Ltd., model number 600JD), 4 parts by mass of a PVDF binder (polyvinylidene fluoride, manufactured by Solvay, model number SOLEF 5130), and 100 parts by mass of N-methylpyrrolidone (manufactured by Mitsubishi Chemical Corporation) as a solvent were mixed.

The electrode paint was applied to a positive electrode base made of aluminum (manufactured by UACJ Corporation, model number 1N30) and dried, to obtain an electrode in which a positive electrode mixture layer having a coating amount per unit area (area density) of 15.0 mg/cm² on one side was formed on both sides of the positive electrode base.

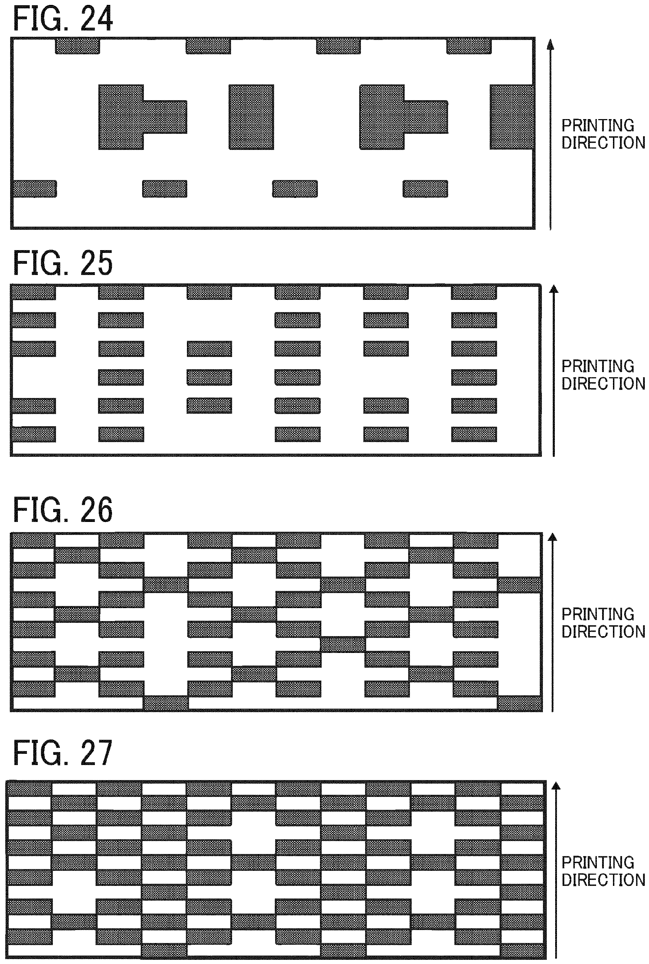

The above-described liquid composition was applied onto one of the positive electrode mixture layers by using an inkjet device (MH2420, manufactured by Ricoh Co., Ltd.) at a resolution of 1,200 dpi (a horizontal direction with respect to a printing direction) x 830 dpi (a printing direction), and the liquid composition was dried to form an insulating layer having a target amount of 0.2 mg/cm². Similarly, an insulating layer was formed on the other positive electrode mixture layer under similar coating conditions (target amount: 0.2 mg/cm²). A droplet amount discharged from the inkjet head was 5 pL, and printing was performed at a discharge rate of 36%. An image pattern is illustrated in FIG. 26. After the coating, the obtained layer was dried at 120°C for 5 minutes by using a constant temperature bath.

The obtained electrode was punched into a predetermined size (a coated surface of 28 mm × 48 mm and an uncoated surface of 10 mm × 13 mm) to manufacture the positive electrode.

### <Preparation of Negative Electrode>

To prepare an electrode paint for forming the negative electrode mixture layer, 97 parts by mass of graphite (manufactured by JFE Chemical Corp., model number BTM-DMP), 1 part by mass of a thickener (carboxymethyl cellulose, manufactured by DKS Co., Ltd., model number CELLOGEN HS-6), 2 parts by mass of a binder (acrylic resin, manufactured by Zeon Corp., model number AZ-9129), and 100 parts by mass of water as a solvent were mixed.

The electrode paint was applied to a negative electrode base made of copper (manufactured by Furukawa Electric Co., Ltd., model number NC-WS, foil thickness 10 µm) and dried, to form a negative electrode mixture layer having a coating amount per unit area (area density) of 9 mg/cm² on each side on both sides of the negative electrode base. The resulting electrode was punched into a predetermined size (a coated surface of 30 mm × 50 mm and an uncoated surface of 10 mm × 11 mm) to manufacture the negative electrode. The negative electrode was not provided with an insulating layer.

### <Measurement of Cover Ratio>

The cover ratio of the insulating layer was measured with a microscope (manufactured by Keyence Corporation, VHX-7000). An image of the insulating layer was captured from the electrode surface at a magnification of 100 times, and Otsu's binarization method (https://www.frontier.maxell.co.jp/blog/posts/4.html, accessed on February 15, 2022) was used to convert the image into a black and white image to determine the cover ratio. Ten images of the insulating layer were captured and the cover ratio for each image was determined to calculate an average value. A cover ratio of 50% was obtained as a result.

### <Area of First Insulating Region and Area of Second Insulating Region>

Microscopic images (magnification of 100) of a surface of the electrode on which the insulating layer was formed were captured by an electron microscope (MERLIN manufactured by Zeiss) and stored as image data.

Next, any one region of the insulating layer was extracted from the obtained image data by using the tool "Magic Wand" (paint.net 4.3) in the image editing/processing software paint.net. Afterwards, the extracted region was binarized, based on the color density, and the area of a unit region having a density of 50% or more, that is, the area (µm²) of the unit insulating layer, was calculated. In the binarized image, a region having a density lower than 50% is the insulating layer non-formation region. The area of the insulating layer non-formation region can also be calculated by a method similar to the one used for the area of the unit insulating layer.

Each of the first insulating regions is an insulating layer formed by one dot having an area of the unit insulating layer that is 1,000 µm² or more.

The second insulating region is an insulating layer in which a plurality of the first insulating regions are coupled (adjacent ones of the first insulating regions contact or overlap each other). In other words, the second insulating region is an insulating layer having an area two times or more the area of a unit insulating layer in which the number of the unit insulating layers is the greatest in the first insulating regions.

Depending on the relationship between the color of the insulating layer and the color of the electrode mixture layer, the binarization based on the color density may not be possible. As an example of such a case, there is a case where the insulating layer and the electrode mixture layer have similar color density and may not be distinguished from each other in the microscope image. In such a case, for example, elemental mapping of an insulating layer material is performed by energy dispersive X-ray spectroscopy (EDS) to obtain a two-dimensional image, so that the total area (µm²) of the unit insulating layers and the area (µm²) of each unit insulating layer in the electron microscope image can be calculated.

The density as a threshold value is set to 50% for binarization based on the color density. This is based on the fact that, for a density of 50% or more, the electrode mixture layer is covered by the insulating layer, so that it is possible to achieve excellent insulation.

The insulating layer of Example 1 included the first insulating regions and the second insulating regions, and the area ratio (A:B) between the first insulating regions and the second insulating regions was 65:35.

### <Manufacturing of Electrochemical Element>

The manufactured positive electrode and negative electrode were alternately laminated to interpose a film separator (manufactured by Toray Industries, Inc., model number F20BHE) to form an electrode element in which three positive electrodes and four negative electrodes were laminated. Uncoated portions of the electrodes were brought together, a nickel tab serving as a negative electrode lead wire was welded to the negative electrodes, and an aluminum tab serving as a positive electrode lead wire was welded to the positive electrodes. Subsequently, LiPF₆ having a concentration of 1.5 M in a non-aqueous electrolyte solution of EC: DMC: EMC = 1: 1: 1 was added to the electrode element, and an aluminum laminate film was used to seal the electrode element, to manufacture a lithium ion secondary battery serving as the electrochemical element.

Next, various characteristics of the obtained electrochemical element of Example 1 were evaluated as follows. The results are presented in Table 1.

### <Initial Charging and Measurement of Initial Capacity>

The positive electrode lead wire and the negative electrode lead wire of the manufactured electrochemical element were connected to a charge/discharge test device (manufactured by Hokuto Denko Co., Ltd., model number HJ0610SD8Y). The non-aqueous electrolyte power storage element was charged at a constant current and a constant voltage with a maximum voltage of 4.2 V and a current rate of 0.2 C for 5 hours, and was then left to stand in a constant temperature bath at 40°C for 5 days after charging was completed. After that, the battery was discharged to 2.5 V at a constant current with a current rate of 0.2 C. After that, the battery was charged at a constant current and a constant voltage with a maximum voltage of 4.2 V and a current rate of 0.2 C for 5 hours, followed by a pause of 10 minutes, and was then discharged to 2.5 V at a constant current with a current rate of 0.2 C. The discharge capacity at that time was defined as an initial capacity. In the following evaluation, each evaluation was performed by using a cell having a discharge capacity within a range of 180 mAh ± 1.8 mAh.

### <Evaluation of Output Density>

The positive electrode lead wire and the negative electrode lead wire of the electrochemical element for which the initial capacity was measured as described above were connected to the charge/discharge tester to charge the electrochemical element with a maximum voltage of 4.2 V and at a current rate of 0.2 C for 5 hours. Subsequently, the charge/discharge process was paused for 10 minutes, and then, the electrochemical element was discharged at a constant current with a current rate of 0.2 C for 2.5 hours so that the depth of charge of the electrochemical element was 50%. Next, a pulse with a current rate of 1C to 10C was used to discharge the electrochemical element for 10 seconds, and a power applied to reach a cutoff voltage of 2.5 V from a correlation straight line between the voltage after the pulse and the current value was calculated. The calculated power was used to calculate the output (W), and the output density was evaluated based on the following criteria.

### [Evaluation Criteria]

A: Output of 10.5 W or more
B: Output of 10 W or more and less than 10.5 W
C: Output of 9 W or more and less than 10 W
D: Output less than 9 W

The evaluation criteria "A" to "C" are pass levels.

### <Evaluation of Float Characteristics>

The positive electrode lead wire and the negative electrode lead wire of the electrochemical element for which the initial capacity was measured as described above were connected to a charge/discharge tester, to charge the electrochemical element with a maximum voltage of 4.2 V and a current rate of 0.2 C for 5 hours in a constant temperature chamber at a temperature of 60°C to completely charge the electrochemical element. The charge/discharge process was paused for 10 minutes, and then, charging of the electrochemical element was continued at a current rate of 0.2 C. At that time, a current flowing through the electrochemical element was measured, and the time until the cumulative electric capacity reached 50 mAh was measured, to evaluate the float characteristics according to the following criteria.

### [Evaluation Criteria]

A: Time to reach a specified value is 200 hours or more
B: Time to reach a specified value is 175 hours or more and less than 200 hours
C: Time to reach a specified value is 150 hours or more and less than 175 hours
D: Time to reach a specified value is less than 150 hours

The evaluation criteria "A" to "C" are pass levels.

### <Evaluation of Temperature Rise Characteristics>

The safety of the electrochemical element was evaluated by a temperature rise test as follows. The electrochemical element of Example 1 was completely charged, and a thermocouple was attached to the electrochemical element and clamped by a restraining jig to fasten a bolt. The obtained electrochemical element was maintained in a constant temperature batch. The constant temperature bath was heated from room temperature to 140°C at a rate of 5°C/min, and held at 140°C for 20 minutes. The temperature of an outer wall of the electrochemical element was measured by using a temperature data logger via the thermocouple.

When the temperature in the electrochemical element rises, the separator shrinks and the positive electrode and the negative electrode contact each other, causing an internal short circuit. Thus, it is not possible to control an internal temperature of the electrochemical element, resulting in thermal runaway. The insulating layer, which is an insulator, is provided on the electrode, and thus, it possible to prevent the thermal runaway. The temperature rise characteristics were evaluated according to the following criteria.

### [Evaluation Criteria]

A: No thermal runaway, completely charged state is maintained
B: No thermal runaway, but certain amount of discharge occurs, and voltage decrease from completely charged state is observed
C: No thermal runaway, but certain amount of discharge occurs, and voltage is 0 after electrochemical element is held at 140°C for 20 minutes
D: Thermal runaway occurs and temperature data logger reaches 300°C or higher

The evaluation criteria "A" to "C" are pass levels.

### (Example 2)

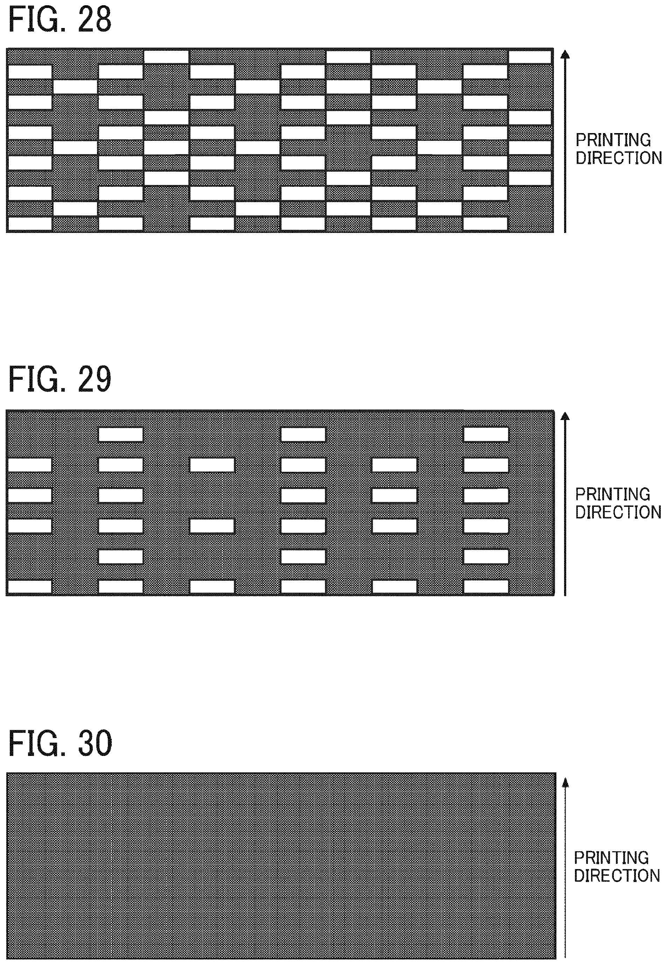

An insulating layer was formed similarly to Example 1, except that the droplet amount discharged from the inkjet head was set to 3 pL and the discharge rate was set to 60%, as compared to Example 1. The electrochemical element was manufactured similarly to Example 1. Various characteristics of the obtained electrochemical element were evaluated similarly to Example 1. The results are presented in Table 1. An image pattern is illustrated in FIG. 28.

A graph expressing a relationship between the area of the unit insulating layer (µm²) and the number of unit insulating layers in Example 2 is illustrated in FIG. 2. From FIG. 2, it can be understood that the insulating layer includes the first insulating regions and the second insulating regions.

The cover ratio in Example 2 was 58% and the insulating layer of Example 2 included the first insulating regions and the second insulating regions, and the area ratio (A:B) between the first insulating regions and the second insulating regions was 20:80.

### (Example 3)

An insulating layer was formed similarly to Example 1, except that the droplet amount discharged from the inkjet head was set to 4 pL and the discharge rate was set to 45%, as compared to Example 1. The electrochemical element was manufactured similarly to Example 1. Various characteristics of the obtained electrochemical element were evaluated similarly to Example 1. The results are presented in Table 1.

An image pattern is illustrated in FIG. 27. The cover ratio in Example 3 was 54% and the insulating layer of Example 3 included the first insulating regions and the second insulating regions, and the area ratio (A:B) between the first insulating regions and the second insulating regions was 50:50.

### (Example 4)

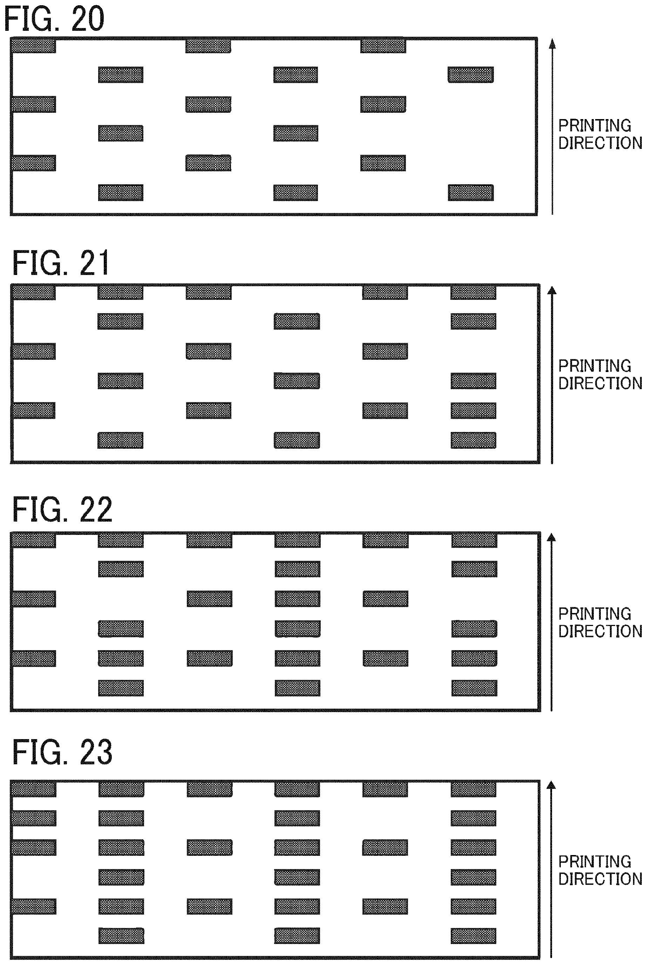

An insulating layer was formed similarly to Example 1, except that the droplet amount discharged from the inkjet head was set to 9 pL and the discharge rate was set to 20%, as compared to Example 1. The electrochemical element was manufactured similarly to Example 1. Various characteristics of the obtained electrochemical element were evaluated similarly to Example 1. The results are presented in Table 1. An image pattern is illustrated in FIG. 23. The cover ratio in Example 4 was 48% and the insulating layer of Example 4 included the first insulating regions and the second insulating regions, and the area ratio (A:B) between the first insulating regions and the second insulating regions was 80:20.

### (Example 5)

An insulating layer was formed similarly to Example 1, except that the droplet amount discharged from the inkjet head was set to 10 pL and the discharge rate was set to 18%, as compared to Example 1. The electrochemical element was manufactured similarly to Example 1. Various characteristics of the obtained electrochemical element were evaluated similarly to Example 1. The results are presented in Table 1. An image pattern is illustrated in FIG. 22.

A graph expressing a relationship between the area of the unit insulating layer (µm²) and the number of unit insulating layers in Example 5 is illustrated in FIG. 1. From FIG. 1, it can be understood that the insulating layer includes the first insulating regions and the second insulating regions.

The cover ratio in Example 5 was 42% and the insulating layer of Example 5 included the first insulating regions and the second insulating regions, and the area ratio (A:B) between the first insulating regions and the second insulating regions was 90:10.

### (Example 6)

An insulating layer was formed similarly to Example 1, except that the droplet amount discharged from the inkjet head was set to 10 pL and the discharge rate was set to 22.5%, as compared to Example 1. The electrochemical element was manufactured similarly to Example 1. Various characteristics of the obtained electrochemical element were evaluated similarly to Example 1. The results are presented in Table 1. An image pattern is illustrated in FIG. 25. The cover ratio in Example 6 was 53% and the insulating layer of Example 6 included the first insulating regions and the second insulating regions, and the area ratio (A:B) between the first insulating regions and the second insulating regions was 30:70.

### (Example 7)

An insulating layer was formed similarly to Example 4, except that the image pattern was changed as illustrated in FIG. 24, but the discharge rate was set to 20% as in Example 4. The electrochemical element was manufactured similarly to Example 1. Various characteristics of the obtained electrochemical element were evaluated similarly to Example 1. The results are presented in Table 1.

The cover ratio in Example 7 was 50% and the insulating layer of Example 7 included the first insulating regions and the second insulating regions, and the area ratio (A:B) between the first insulating regions and the second insulating regions was 50:50.

### (Example 8)

An insulating layer was formed similarly to Example 1, except that the positive electrode mixture layer was divided into a left side and a right side, and on the left side, the droplet amount discharged from the inkjet head was set to 3 pL and the discharge rate was set to 60%, and on the right side, the droplet amount discharged from the inkjet head was set to 10 pL and the discharge rate was set to 18%. The electrochemical element was manufactured similarly to Example 1. Various characteristics of the obtained electrochemical element were evaluated similarly to Example 1. The results are presented in Table 1.

Image patterns were similar to those in Examples 2 and 5, respectively. The cover ratio in Example 8 was 50%, the area ratio (A:B) between the first insulating regions and the second insulating regions on the left side was 90: 10, the area ratio (A:B) between the first insulating regions and the second insulating regions on the right side was 20:80, and the area ratio (A:B) between the first insulating regions and the second insulating regions in the entire positive electrode mixture layer was 90: 10.

### (Example 9)

An insulating layer was formed similarly to Example 3, except that an image pattern was formed in which a square region of 500 µm × 500 µm was covered with the second insulating region to protect the positive electrode lead wire in Example 3. The electrochemical element was manufactured similarly to Example 1. Various characteristics of the obtained electrochemical element were evaluated similarly to Example 1. The results are presented in Table 1.

The image pattern was similar to Example 3, except that the covered region was provided. The cover ratio in Example 9 was 54% and the insulating layer of Example 9 included the first insulating regions and the second insulating regions, and the area ratio (A:B) between the first insulating regions and the second insulating regions was 50:50.

### (Example 10)

An insulating layer was formed similarly to Example 3, except that an image pattern was formed in which a square region of 500 µm × 500 µm was not covered with the second insulating region at the four ends of the positive electrode mixture layer, and 1 µL of an epoxy resin (manufactured by DIC Corporation, EPICLON860) was applied to the uncovered square region in Example 3. The electrochemical element was manufactured similarly to Example 1. Various characteristics of the obtained electrochemical element were evaluated similarly to Example 1. The results are presented in Table 1.

The image pattern was similar to Example 3, except that the uncovered square region was provided. The cover ratio in Example 10 was 46% and the insulating layer of Example 10 included the first insulating regions and the second insulating regions, and the area ratio (A:B) between the first insulating regions and the second insulating regions was 50:50.

### (Example 11)

An insulating layer was formed similarly to Example 3, except that an image pattern was formed in which a square region of 500 µm × 500 µm was covered with the second insulating region to protect the positive electrode lead wire and 1 µL of an epoxy resin was applied to the uncovered region in Example 3. The electrochemical element was manufactured similarly to Example 1. Various characteristics of the obtained electrochemical element were evaluated similarly to Example 1. The results are presented in Table 1.

The image pattern was similar to Example 3, except that the uncovered region and the covered region was provided. The cover ratio in Example 11 was 50% and the insulating layer of Example 11 included the first insulating regions and the second insulating regions, and the area ratio (A:B) between the first insulating regions and the second insulating regions was 50:50.

### (Example 12)

An insulating layer was formed similarly to Example 1, except that the droplet amount discharged from the inkjet head was set to 2.3 pL and the discharge rate was set to 80%, as compared to Example 1. The electrochemical element was manufactured similarly to Example 1. Various characteristics of the obtained electrochemical element were evaluated similarly to Example 1. The results are presented in Table 1.

An image pattern is illustrated in FIG. 29. The cover ratio in Example 12 was 59% and the insulating layer of Example 12 included the first insulating regions and the second insulating regions, and the area ratio (A:B) between the first insulating regions and the second insulating regions was calculated as 10:90.

### (Example 13)

An insulating layer was formed similarly to Example 1, except that the droplet amount discharged from the inkjet head was set to 12 pL and the discharge rate was set to 15%, as compared to Example 1. The electrochemical element was manufactured similarly to Example 1. Various characteristics of the obtained electrochemical element were evaluated similarly to Example 1. The results are presented in Table 1.

An image pattern is illustrated in FIG. 21. The cover ratio in Example 13 was 41% and the insulating layer of Example 13 included the first insulating regions and the second insulating regions, and the area ratio (A:B) between the first insulating regions and the second insulating regions was 95:5.

### (Comparative Example 1)

An insulating layer was formed similarly to Example 1, except that the droplet amount discharged from the inkjet head was set to 1.8 pL and the discharge rate was set to 100%, as compared to Example 1. The electrochemical element was manufactured similarly to Example 1. Various characteristics of the obtained electrochemical element were evaluated similarly to Example 1. The results are presented in Table 1.

An image pattern is illustrated in FIG. 30. The cover ratio in Comparative Example 1 was 60%, and the area ratio (A:B) between the first insulating regions and the second insulating regions was 0:100.

### (Comparative Example 2)

An insulating layer was formed similarly to Example 1, except that the droplet amount discharged from the inkjet head was set to 15 pL and the discharge rate was set to 12%, as compared to Example 1. The electrochemical element was manufactured similarly to Example 1. Various characteristics of the obtained electrochemical element were evaluated similarly to Example 1. The results are presented in Table 1.

An image pattern is illustrated in FIG. 20. The cover ratio in Comparative Example 2 was 40%, and the area ratio (A:B) between the first insulating regions and the second insulating regions was calculated as 100:0.

**Table 1**

| | Area ratio (A:B) | Discharge rate (%) | Droplet amount (pL) | Target amount (mg/cm²) | Covered region | Uncovered region | Cover ratio (%) | Temperature rise test | Charge/ discharge characteristics | Float characteristics |
|---|---|---|---|---|---|---|---|---|---|---|
| Example 1 | 65:35 | 36 | 5 | 0.2 | | | 50 | A | A | A |
| Example 2 | 20:80 | 60 | 3 | 0.2 | | | 58 | A | B | A |
| Example 3 | 50:50 | 45 | 4 | 0.2 | | | 54 | B | A | B |
| Example 4 | 80:20 | 20 | 9 | 0.2 | | | 48 | A | B | A |
| Example 5 | 90:10 | 18 | 10 | 0.2 | | | 42 | B | A | B |
| Example 6 | 30:70 | 22.5 | 10 | 0.25 | | | 53 | A | C | B |
| Example 7 | 50:50 | 20 | 9 | 0.2 | | | 50 | B | B | A |
| Example 8 | 20:80 | 60 | 3 | 0.2 | | | 50 | A | A | A |
| | 90:10 | 18 | 10 | | | | | | | |
| Example 9 | 50:50 | 45 | 4 | 0.2 | Provided | | 54 | A | A | B |
| Example 10 | 50:50 | 45 | 4 | 0.2 | | Provided | 46 | A | A | B |
| Example 11 | 50:50 | 45 | 4 | 0.2 | Provided | Provided | 50 | A | A | B |
| Example 12 | 10:90 | 80 | 2.3 | 0.2 | | | 59 | A | C | A |
| Example 13 | 95:5 | 15 | 12 | 0.2 | | | 41 | C | A | C |
| Comparative Example 1 | 0:100 | 100 | 1.8 | 0.2 | | | 60 | A | D | A |
| Comparative Example 2 | 100:0 | 12 | 15 | 0.2 | | | 40 | D | A | D |

| | | | | | | | | | | |
|---|---|---|---|---|---|---|---|---|---|---|
| ^{∗} "Provided" in the column of the covered region in Table 1 means that the covered region is provided. ^{∗} "Provided" in the column of the uncovered region in Table 1 means that the uncovered region is provided. | | | | | | | | | | |

For example, aspects of the present embodiments include the following.
<1> An electrode including a base, an electrode mixture layer on the base, and an insulating layer on the electrode mixture layer, in which, in a surface image of the insulating layer viewed from above the electrode, the insulating layer includes unit insulating layers each surrounded by a non-insulating layer region where the insulating layer is not formed, and when, in a graph having a horizontal axis representing an area (µm²) of the unit insulating layers and a vertical axis representing a number of the unit insulating layers, a part of the unit layers having a greatest number among unit layers having an area (µm²) of 1,000 µm² or more are designated as first insulating regions (23a), and another part of the unit insulating layers each having an area (µm²) two times or more of an area of each of the first insulating regions (23a) are designated as second insulating regions (23b), the insulating layer (23) includes both the first insulating regions (23a) and second insulating regions (23b).
<2> The electrode according to <1> described above, in which a line segment passing through a center of gravity of each of the second insulating regions and having both ends in contact with an outer periphery of the second insulating region has a maximum length exceeding 500 µm.
<3> The electrode according to any one of <1> and <2> described above, in which each of the second insulating regions has an area of 8,000 µm² or more.
<4> The electrode according to any one of <1> and <2> described above, in which an area ratio (A:B) between an area A of the first insulating regions and an area B of the second insulating regions is from 20:80 to 90: 10.
<5> The electrode according to any one of <1> and <2> described above, in which the electrode mixture layer includes a covered region where a square region having sides of 500 µm or more is covered with at least one of the first insulating regions and the second insulating regions.
<6> The electrode according to <5> described above, further including a current collecting portion, in which the covered region is provided around the current collecting portion.
<7> The electrode according to any one of <1> and <2> described above, in which the electrode mixture layer includes an uncovered region where a square region having sides of 500 µm or more is not covered with at least one of the first insulating regions and the second insulating regions.
<8> The electrode according to <7> described above, in which the uncovered region is provided in an end portion of the electrode mixture layer.
<9> The electrode according to <7> described above, in which the uncovered region is provided in a corner portion of the electrode mixture layer.
<10> The electrode according to any one of <1> and <2> described above, in which the insulating layer contains insulating particles.
<11> The electrode according to <10> described above, in which the insulating particles comprise α-alumina.
<12> An electrode including a base, an electrode mixture layer on the base, and an insulating layer on the electrode mixture layer, in which the insulating layer has a sea-island shape, when the electrode is viewed from above, and the insulating layer includes insulating regions each formed of one dot and formed by discharge from a nozzle, and an insulating regions each formed of a plurality of dots and formed by coupling the insulating regions formed of one dot.
<13> An electrochemical element including the electrode according to any one of <1> and <2> described above.
<14> An apparatus for manufacturing the electrode according to any one of <1> and <2> described above, the apparatus including a discharge unit including a plurality of discharge ports configured to discharge a liquid composition, and a control unit configured to control discharge of the liquid composition from the discharge unit, in which the control unit performs control so that the liquid composition is discharged from one discharge port of the plurality of discharge ports and the liquid composition is not discharged from another discharge port of the plurality of discharge ports.
<15> The apparatus according to <14> described above, in which the control unit controls a discharge amount of the liquid composition discharged from the one discharge port to be 3 pL or more and 10 pL or less per discharge.
<16> A method of manufacturing the electrode according to any one of <1> and <2> described above, the method including
   discharging a liquid composition from a discharge unit including a plurality of discharge ports, and
   controlling discharge of the liquid composition,
   in which the controlling includes performing control so that the liquid composition is discharged from one discharge port of the plurality of discharge ports and the liquid composition is not discharged from another discharge port of the plurality of discharge ports.
<17> The method according to <16> described above, in which the controlling includes controlling a discharge amount of the liquid composition discharged from the one discharge port to be 3 pL or more and 10 pL or less per discharge.

According to the electrode according to any one of <1> to <12> described above, the electrochemical element according to <13> described above, the apparatus for manufacturing an electrode according to any one of <14> and <15> described above, and the method of manufacturing an electrode according to any one of <16> and <17> described above, it is possible to solve various conventional problems and achieve the object of the present disclosure.

Any one of the above-described operations may be performed in various other ways, for example, in an order different from the one described above.

## Claims

1. An electrode comprising:
a base (21);
an electrode mixture layer (22) on the base (21); and
an insulating layer (23) on the electrode mixture layer (22),
wherein, in a surface image of the insulating layer (23) viewed from above the electrode, the insulating layer (23) includes unit insulating layers each surrounded by a non-insulating layer region where the insulating layer (23) is not formed, and
when, in a graph having a horizontal axis representing an area (µm²) of the unit insulating layers and a vertical axis representing a number of the unit insulating layers, a part of the unit insulating layers having a greatest number among unit layers having an area (µm²) of 1,000 µm² or more are designated as first insulating regions (23a), and another part of the unit insulating layers each having an area (µm²) two times or more of an area of each of the first insulating regions (23a) are designated as second insulating regions (23b),
the insulating layer (23) includes both the first insulating regions (23a) and second insulating regions (23b).

2. The electrode according to claim 1, wherein a line segment passing through a center of gravity of each of the second insulating regions (23b) and having both ends in contact with an outer periphery of said second insulating region (23b) has a maximum length exceeding 500 µm.

3. The electrode according to any one of claims 1 and 2, wherein each of the second insulating regions (23b) has an area of 8,000 µm² or more.

4. The electrode according to any one of claims 1 and 2, wherein an area ratio (A:B) between an area A of the first insulating regions (23a) and an area B of the second insulating regions (23b) is from 20:80 to 90:10.

5. The electrode according to any one of claims 1 and 2, wherein the electrode mixture layer (22) includes a covered region (25) where a square region having sides of 500 µm or more is covered with at least one of the first insulating regions (23a) and the second insulating regions (23b).

6. The electrode according to claim 5, further comprising a current collecting portion (21),
wherein the covered region (25) is provided around the current collecting portion (21).

7. The electrode according to any one of claims 1 and 2, wherein the electrode mixture layer (22) includes an uncovered region (26) where a square region having sides of 500 µm or more is not covered with at least one of the first insulating regions (23a) and the second insulating regions (23b).

8. The electrode according to claim 7, wherein the uncovered region (26) is provided in an end portion of the electrode mixture layer (22).

9. The electrode according to claim 7, wherein the uncovered region (26) is provided in a corner portion of the electrode mixture layer (22).

10. The electrode according to any one of claims 1 and 2, wherein the insulating layer (23) contains insulating particles.

11. An electrochemical element (1001) comprising the electrode (1015) according to any one of claims 1 and 2.

12. An apparatus (300, 300') for manufacturing the electrode according to any one of claims 1 and 2, the apparatus (300, 300') comprising:
a discharge unit (1a, 306, 101, 24-1) including a plurality of discharge ports (37) configured to discharge a liquid composition; and
a control unit (24-2) configured to control discharge of the liquid composition from the discharge unit (1a, 306, 101, 24-1),
wherein the control unit (24-2) performs control so that the liquid composition is discharged from one discharge port of the plurality of discharge ports (37) and the liquid composition is not discharged from the rest of the plurality of discharge ports (37).

13. The apparatus (300, 300') according to claim 12, wherein the control unit (24-2) controls a discharge amount of the liquid composition discharged from one discharge port of the plurality of discharge ports (37) to be 3 pL or more and 10 pL or less per discharge.

14. A method of manufacturing the electrode according to any one of claims 1 and 2, the method comprising:
discharging a liquid composition from a discharge unit (1a, 306, 101, 24-1) including a plurality of discharge ports (37); and
controlling discharge of the liquid composition,
wherein the controlling includes performing control so that the liquid composition is discharged from one discharge port of the plurality of discharge ports (37) and the liquid composition is not discharged from the rest of the plurality of discharge ports (37).

15. The method according to claim 14, wherein the controlling includes controlling a discharge amount of the liquid composition discharged from one discharge port of the plurality of discharge ports (37) to be 3 pL or more and 10 pL or less per discharge.
